# EUROPÄISCHE PATENTANMELDUNG

(11) **EP 4 386 264 A2**
(43) Veröffentlichungstag der Anmeldung: **19.06.2024**
(21) Anmeldenummer: 24166595.9
(22) Anmeldetag: 29.12.2021
(51) Int. Cl.: F23N 5/24

(54) **SONDENKOPF UND SONDENANORDNUNG**

(30) Priorität: 29.12.2020 DE 102020135067
(62) Teilanmeldung aus: 21844770.4
(71) Anmelder: CheMin GmbH, 86167 Augsburg (DE)
(72) Erfinder: LICHTINGER, Andreas, 86167 Augsburg (DE); BRELL, Joos, 86167 Augsburg (DE); SCHNEIDER, Dominik, 86167 Augsburg (DE); UNGER, Andreas, 86167 Augsburg (DE)
(74) Vertreter: Schlosser, Martin

(57) **Zusammenfassung**

Die Erfindung betrifft einen Sondenkopf, mit welchem eine visuelle Beobachtung eines heißgasführenden Systems von Innen möglich ist. Die Erfindung betrifft des Weiteren eine Sondenanordnung mit einem solchen Sondenkopf.

## Beschreibung

Die Erfindung betrifft einen Sondenkopf zur visuellen Beobachtung eines heißgasführenden Systems von innen sowie eine Sondenanordnung mit einem solchen Sondenkopf.

Ein heißgasführendes System kann beispielsweise ein rauchgasführendes System sein. Dementsprechend kann es sich bei einem Heißgas beispielsweise um ein Rauchgas handeln. Rauchgasführende Systeme dienen typischerweise dazu, bei Verbrennungsprozessen entstehende Wärme einem Wärmeträgermedium zuzuführen. Beispielsweise kann es sich bei dem Wärmeträgermedium um Wasser handeln, welches in Wänden oder speziellen Wärmetauschern des rauchgasführenden Systems erwärmt wird und die dabei aufgenommene Wärme an anderer Stelle wieder abgeben kann. Dadurch kann beispielsweise eine Turbine angetrieben werden, welche wiederum auf einen stromerzeugenden Generator oder auf ein anderes anzutreibendes technisches System wie beispielsweise eine Schiffschraube wirken kann. Ebenso kann das Wärmeträgermedium beispielsweise zum Heizen von Gebäuden oder zum Erzeugen von Prozesswärme verwendet werden.

Ein rauchgasführendes System weist typischerweise eine Feuerung auf, in welcher Brennstoffe wie beispielsweise Kohle, Öl, Gas, Biomasse oder Abfall verbrannt werden können. Hierbei kann auf bekannte Konzepte wie beispielsweise Fest- oder Wirbelschichtreaktoren oder Rostfeuerung zurückgegriffen werden. Dabei entstehendes Rauchgas wird typischerweise über einen oder mehrere Rauchgaszüge des rauchgasführenden Systems geführt, um ihm Wärme zu entziehen. Je nach Ausführung können auch lediglich diese Rauchgaszüge als rauchgasführendes System angesehen werden. Beispielsweise können Wärmetauscher in Wänden des rauchgasführenden Systems ausgebildet sein, wozu beispielsweise Rohre zum Durchleiten des Wärmeträgermediums vorhanden sein können. Des Weiteren können beispielsweise auch Wärmetauscher spezifisch in den Rauchgasstrom eingebracht werden. Anschließend können beispielsweise Vorrichtungen zur Reinigung des Rauchgases vorhanden sein, in welchen dem Rauchgas Schadstoffe entzogen werden, bevor es in einen Kamin oder einen Schornstein zur Ableitung gelangt.

Rauchgasführende Systeme haben aufgrund der erwähnten Verbrennungsprozesse typischerweise sehr hohe Temperaturen von mehreren 100° C, gegebenenfalls auch über 1.000° C. Bei derartigen Temperaturen und typischerweise auftretenden stark reaktiven Gasen, welche im Rauchgas enthalten sind, kommt es zu erheblichen und schwer vorhersagbaren Korrosionsprozessen, welche Komponenten wie Wände oder Wärmetauscher angreifen können. Außerdem kommt es zur Belagsbildung, d.h. Oberflächen werden mit abgeschiedenen Substanzen belegt, was deren Eigenschaften verändern kann, beispielsweise eine Wärmeleitung verschlechtern kann. Dies kann als Verschmutzung bezeichnet werden. Um das Verständnis derartiger Prozesse zu erhöhen, existieren bereits unterschiedliche Konzepte. Beispielsweise können rauchgasführende Systeme im Rahmen einer Revision manuell untersucht werden, wozu jedoch eine temporäre Stilllegung und ein ausreichendes Spülen mit Frischluft erforderlich sind, da ansonsten das rauchgasführende System nicht von Menschen betreten werden kann. Außerdem sind bereits Konzepte für Materialtests im Rauchgas verfügbar. Zum gezielten Abtragen von Belägen innerhalb des rauchgasführenden Systems existieren Geräte, welche Wasser oder eine andere Flüssigkeit oder auch Dampf während des Betriebs auf die Schichten sprühen können und diese damit ablösen können. Es hat sich jedoch als sehr schwierig herausgestellt, die Wirksamkeit derartiger Reinigungssysteme zu beurteilen und sie zu optimieren.

Ebenso kann es sich bei einem Heißgas beispielsweise um ein Synthesegas handeln. Ein solches kann beispielsweise bei einem chemischen Prozess entstehen, bei welchem eine Umsetzung von einem oder mehreren Edukten in eines oder mehrere Produkte erfolgt. Beispielsweise kann ein solcher chemischer Prozess in einem Reaktor erfolgen, welcher beispielsweise unter einem Überdruck stehen kann. Das heißgasführende System kann somit auch ein Reaktor sein. Dabei kann das Synthesegas beispielsweise ein Zwischenprodukt sein, welches in der Umsetzung nur zeitweilig entsteht und dann in ein Produkt eingeht, oder das Synthesegas kann auch ein unerwünschtes Abfallprodukt sein. Auch derartige Synthesegase oder auch andere Heißgase haben typischerweise Temperaturen von mindestens 100° C oder mindestens mehreren 100° C, je nach Anwendung auch über 1.000° C. Synthesegase oder andere Heißgase können ebenso wie Rauchgas korrosiv sein und somit Anforderungen mit sich bringen, welche denen eines Rauchgases sehr ähnlich sind.

Es wäre deshalb wünschenswert, zumindest eines der genannten Probleme zu lösen und/oder eine bessere oder alternative Möglichkeit zur Diagnose, Überwachung und/oder Optimierung eines heißgasführenden Systems bereitzustellen.

Dies wird erfindungsgemäß durch einen Sondenkopf sowie eine Sondenanordnung gemäß den jeweiligen Hauptansprüchen erreicht. Bevorzugte Ausgestaltungen können beispielsweise den jeweiligen abhängigen Ansprüchen entnommen werden. Der Inhalt der Ansprüche wird durch ausdrückliche Inbezugnahme zum Inhalt der Beschreibung gemacht.

Die Erfindung betrifft einen Sondenkopf zur visuellen Beobachtung eines heißgasführenden Systems von innen, wobei der Sondenkopf zur Anordnung im Heißgas ausgebildet ist. Der Sondenkopf weist zweckmäßig ein Sichtfenster auf, welches im Sondenkopf ausgebildet ist und insbesondere ganz oder teilweise von einem ganz oder teilweise transparenten Schutzelement abgedeckt wird. Der Sondenkopf weist zweckmäßig ferner eine Beobachtungseinheit auf, die zumindest teilweise im Sondenkopf angeordnet ist und insbesondere zur Beobachtung durch das Sichtfenster konfiguriert ist.

Mittels eines solchen Sondenkopfs ist eine unmittelbare visuelle Beobachtung von Vorgängen innerhalb eines heißgasführenden Systems auch während des Betriebs möglich. Beispielsweise können damit Verbrennungsprozesse oder Syntheseprozesse beobachtet werden, wodurch diese beispielsweise optimiert werden können. Des Weiteren können beispielsweise Korrosionsvorgänge oder die Wirksamkeit von Reinigungsanlagen visuell beobachtet werden, was ebenfalls deren Verständnis erleichtert und damit auch die Entwicklungen von Maßnahmen zur Vermeidung von Korrosion oder die Optimierung einer Reinigung ermöglicht.

Der Sondenkopf kann insbesondere als ein Bauelement angesehen werden, welches unmittelbar an einer Kesselwand eines heißgasführenden Systems oder an einer dafür vorgesehenen Halterung, beispielsweise einem Sondenträger, im Heißgas befestigt werden kann. Die Ausbildung zur Anordnung im Heißgas bedeutet insbesondere, dass der Sondenkopf dazu ausgebildet ist, Einwirkungen insbesondere aufgrund der Zusammensetzung des Heißgases und der hohen Temperaturen standzuhalten, insbesondere für eine vordefinierte Einsatzzeit. Dies kann beispielsweise durch die geeignete Wahl von Materialien, Wandstärken oder das Vorsehen von Möglichkeiten zur aktiven Temperierung erreicht werden, worauf weiter unten noch näher eingegangen werden wird.

Unter einer visuellen Beobachtung wird insbesondere verstanden, dass Bilder aus dem Inneren des heißgasführenden Systems nach außen übertragen werden und dort für das menschliche Auge und/oder eine automatisierte Bilderkennung verfügbar und/oder sichtbar sind. Sie können beispielsweise auf einem Bildschirm eines Computers angezeigt werden. Die visuelle Beobachtung kann insbesondere im visuellen Bereich, im Infrarotbereich und/oder im Ultraviolettbereich des elektromagnetischen Spektrums erfolgen.

Bei dem Sichtfenster kann es sich insbesondere um ein Fenster handeln, durch welches eine Beobachtung des heißgasführenden Systems von innen, also von innerhalb des heißgasführenden Systems, möglich ist. Die innerhalb des Sondenkopfs angeordnete Beobachtungseinheit blickt somit durch das Sichtfenster auf einen zu beobachtenden Teil, beispielsweise auf einen Abschnitt einer Kesselwand, welcher korrodiert und/oder gereinigt wird. Wenn das Sichtfenster ganz von dem Schutzelement abgedeckt wird, kann das Schutzelement beispielsweise einen Innenraum des Sondenkopfs, welcher ansonsten durch das Sichtfenster fluidisch mit der Umgebung des Sondenkopfs verbunden wäre, fluidisch von der Umgebung abtrennen. Dies kann beispielsweise durch eine Abdichtung des Schutzelements gegen das Sichtfenster erfolgen. Es kann jedoch auch ein Luftspalt gelassen werden, welcher beispielsweise ein Entweichen von Luft aus dem Inneren des Sondenkopfs ermöglicht. Bei einer nur teilweisen Abdeckung des Sichtfensters durch das Schutzelement kann insbesondere ein Fluidaustausch ermöglicht werden. Bei einer vollständig transparenten Ausführung des Schutzelements kann durch das gesamte Schutzelement beobachtet werden. Bei einer nur teilweise transparenten Ausführung kann das Schutzelement beispielsweise Bereiche aufweisen, durch welche nicht beobachtet werden kann. Diese können beispielsweise zu Verstärkungs- oder Markierungszwecken verwendet werden.

Die Beobachtungseinheit ist insbesondere dazu ausgebildet, statische Bilder und/oder Videos aufzunehmen, und zwar insbesondere durch das Sichtfenster, wodurch eine Umgebung des Sondenkopfs beobachtet werden kann. Beispielhafte Ausführungen werden weiter unten näher beschrieben werden. Unter einer Beobachtung durch das Sichtfenster kann insbesondere verstanden werden, dass die Beobachtungseinheit durch das Sichtfenster blickt und/oder dass ein zu beobachtender Bereich und die Beobachtungseinheit durch das Sichtfenster voneinander getrennt sind. Aufgrund der bereits erwähnten Transparenz des Schutzelements wird die Beobachtung jedoch nicht beeinträchtigt. Das Schutzelement stellt vielmehr einen mechanischen Schutz der Beobachtungseinheit und/oder sonstiger Komponenten innerhalb des Sondenkopfs dar, so dass die Verwendbarkeit in der bereits erwähnten korrosiven Heißgasatmosphäre verbessert wird.

Insbesondere kann es sich bei einem Heißgas um ein Rauchgas oder um ein Synthesegas handeln. Dementsprechend kann grundsätzlich der Begriff Heißgas durch den Begriff Rauchgas und/oder den Begriff Synthesegas ersetzt werden. Auf die eingangs gegebenen Erläuterungen sei verwiesen.

Der Sondenkopf kann gemäß einer Ausführung eine Verstelleinrichtung aufweisen, mittels welcher eine Blickrichtung der Beobachtungseinheit innerhalb eines Verstellbereichs relativ zum Sondenkopf, insbesondere relativ zum Rest des Sondenkopfs, verstellbar ist. Mittels einer solchen Verstelleinrichtung ist somit eine Änderung der Blickrichtung auch während einer Beobachtung ohne Ausbau oder sonstige Verstellung des Sondenkopfs an sich möglich. Der Sondenkopf kann also in einer festen Position bleiben, und trotzdem können durch die Verstelleinrichtung unterschiedliche Bereiche innerhalb des heißgasführenden Systems beobachtet werden.

Die Blickrichtung kann mittels der Verstelleinrichtung insbesondere verstellbar sein, während der Sondenkopf am gleichen Ort bleibt und/oder nicht rotiert. Mit anderen Worten kann der Sondenkopf, abgesehen von einer Betätigung der Verstelleinrichtung und der damit verbundenen Änderung der Beobachtungseinheit, völlig unverändert bleiben. Die Verstelleinrichtung erlaubt auch in diesem Fall die Einstellung der Blickrichtung.

Die Verstelleinrichtung kann insbesondere von außerhalb des Sondenkopfs und/oder von außerhalb des heißgasführenden Systems betätigbar ausgeführt sein. Dies ermöglicht eine besonders einfache Bedienung, da ein Bediener sich außerhalb des heißgasführenden Systems aufhalten kann und somit auch während einer laufenden Beobachtung bei vorhandenem Heißgas sicher und ohne eigenen Kontakt mit dem Heißgas eine Verstellung vornehmen kann.

Die Verstelleinrichtung kann insbesondere mindestens eine Stange zur Verschwenkung eines Teils der Beobachtungseinheit um einen Drehpunkt oder eine Drehachse aufweisen. Eine solche Stange ermöglicht eine besonders einfache Bedienung. Sie kann beispielsweise mittels eines oder mehrerer Gelenke an der Beobachtungseinheit angebracht sein. Sie kann beispielsweise durch einen hierfür vorgesehenen Kanal und/oder einen Innenraum eines Rohrs und/oder eines Sondenträgers nach außen geführt werden, so dass eine Betätigung durch einen Bediener von außerhalb des heißgasführenden Systems einfach möglich ist. Alternativ können auch andere Ausführungen der Verstelleinrichtung vorgesehen sein, beispielsweise kann eine elektrische Verstelleinrichtung innerhalb des Sondenkopfs vorgesehen sein, welche durch analoge und/oder digitale Signale von außerhalb betätigbar sein kann. Beispielsweise kann im Sondenkopf ein Elektromotor vorgesehen sein, welcher eine lokale Mechanik antreiben kann.

Der Drehpunkt oder die Drehachse kann bzw. können insbesondere innerhalb des Sondenkopfs definiert sein. Dies ermöglicht eine Verschwenkung von Komponenten innerhalb des Sondenkopfs bei ansonsten unverändertem, insbesondere nicht bewegtem und nicht rotiertem Sondenkopf.

Die Verstelleinrichtung kann insbesondere zum Verschwenken der Blickrichtung um mindestens 90° ausgebildet sein. Dadurch kann eine vorteilhafte Beobachtungsmöglichkeit eines entsprechend großen Raumwinkels ermöglicht werden. Auch kleinere oder größere Verschwenkbereiche sind jedoch möglich. Bei einem Verschwenken um mindestens 90° kann insbesondere vorgesehen sein, dass eine Blickrichtung entlang einer Längsrichtung nach vorne möglich ist, und dass ebenso durch Verschwenken mittels der Verstelleinrichtung eine Blickrichtung im rechten Winkel dazu, also insbesondere zur Seite, möglich ist. Dies erlaubt beispielsweise die Beobachtung einer gegenüberliegenden Kesselwand und einer senkrecht dazu stehenden Kesselwand oder auch die Beobachtung eines Übergangs zwischen zwei Heißgaszügen.

Der Verstellbereich kann insbesondere eine Blickrichtung parallel oder identisch zu einer Längsachse des Sondenkopfs beinhalten. Dies ermöglicht unter anderem eine Beobachtung gerade nach vorne aus dem Sondenkopf heraus.

Das Sichtfenster kann insbesondere einen Raumwinkelbereich einnehmen, welcher sich entlang des Verstellbereichs erstreckt. Dies ermöglicht eine vorteilhafte Anpassung des Sichtfensters an den Verstellbereich, so dass die durch die Beobachtungseinheit mögliche Beobachtungsfähigkeit ausgenutzt werden kann. Insbesondere kann entsprechend den Möglichkeiten der Beobachtungseinheit entlang des Verstellbereichs auch das Schutzelement transparent ausgebildet sein, so dass das Schutzelement die Beobachtung nicht einschränkt.

Das Sichtfenster kann insbesondere einen Raumwinkelbereich einnehmen, welcher bei allen Blickrichtungen innerhalb des Verstellbereichs einen Sichtbereich der Beobachtungseinheit umfasst. Auch dadurch können die Möglichkeiten der Beobachtungseinheit ideal ausgenutzt werden.

Unter einem Sichtbereich sei insbesondere ein Bereich verstanden, welcher in einer jeweils aktuellen Stellung der Beobachtungseinheit visuell erfasst werden kann. Eine Blickrichtung kann insbesondere eine definierte Richtung innerhalb dieses Sichtbereichs sein, wodurch eine aktuelle Stellung der Beobachtungseinheit charakterisierbar ist. Beispielsweise kann es sich bei der Blickrichtung um eine Symmetrieachse des Sichtbereichs handeln. Die Blickrichtung kann beispielsweise senkrecht auf einer Detektoroberfläche der Beobachtungseinheit stehen. Der Sichtbereich kann umgebend um die Blickrichtung ausgebildet sein.

Die Verstelleinrichtung kann insbesondere zum Drehen der Blickrichtung um eine Längsachse des Sondenkopfs ausgebildet sein. Dies kann insbesondere relativ zum Rest des Sondenkopfs erfolgen. Dadurch können insbesondere unterschiedliche Bereiche seitlich zum Sondenkopf beobachtet werden. Die Drehbarkeit kann dabei beispielsweise vollständig umlaufend sein, also 360° betragen, oder auch einen kleineren Winkelbereich betragen.

Der Sondenkopf kann gemäß einer Ausführung ferner eine Beleuchtungsvorrichtung in dem Sondenkopf aufweisen, wobei die Beleuchtungsvorrichtung vorzugsweise zum Ausleuchten eines Sichtbereichs der Beobachtungseinheit ausgebildet ist. Durch diese Beleuchtungsvorrichtung kann aktiv Licht im heißgasführenden System erzeugt oder in dieses eingebracht werden, so dass insbesondere ein zu beobachtender Bereich beleuchtet und somit besser erkannt und beobachtet werden kann.

Eine Abstrahlrichtung der Beleuchtungsvorrichtung kann beispielsweise von einer Beleuchtungsverstelleinrichtung oder der bereits weiter oben erwähnten Verstelleinrichtung relativ zum Sondenkopf verstellbar sein. Dies ermöglicht ein Anpassen der Abstrahlrichtung derart, dass gewünschte Bereiche ausgeleuchtet werden. Bei der Abstrahlrichtung kann es sich beispielsweise um eine definierte Richtung innerhalb eines Lichtkegels, beispielsweise um eine Symmetrieachse, handeln.

Wenn die Beleuchtungsvorrichtung ebenfalls durch die Verstelleinrichtung verstellbar ist, kann beispielsweise sichergestellt werden, dass immer derjenige Bereich von der Beleuchtungsvorrichtung ausgeleuchtet wird, welcher von der Beobachtungseinheit gesehen und/oder aufgenommen wird. Beleuchtungsvorrichtung und Beobachtungseinheit können insbesondere synchron verstellbar sein.

Gemäß einer Ausführung kann außenseitig auf dem Sondenkopf oder auf einem außenseitig am Sondenkopf ausgebildeten Testabschnitt eine im Heißgas zu testende Schutzschicht, ein im Heißgas zu testender Werkstoff und/oder ein im Heißgas zu testendes Material aufgebracht sein. Eine solche Ausführung ermöglicht es, eine visuelle Beobachtung mit einem Materialtest zu kombinieren, so dass während eines Zeitraums, in welchem sich der Sondenkopf im Heißgas befindet, nicht nur eine visuelle Beobachtung stattfinden kann, sondern zusätzlich auch mittels des gleichen Sondenkopfs ein Materialtest oder sonstiger Test mit der Schutzschicht, dem Werkstoff oder dem Material im Heißgas stattfinden kann. Dabei kann beispielsweise der Sondenkopf an sich mit der zu testenden Schutzschicht, dem zu testenden Werkstoff oder dem zu testenden Material versehen sein, so dass er vollständig außenseitig von der zu testenden Schutzschicht, dem zu testenden Werkstoff oder dem zu testenden Material bedeckt ist. Es kann jedoch auch ein Testabschnitt ausgebildet sein, welcher nur einen Teilbereich des Sondenkopfs außenseitig einnimmt, auf welchem die zu testende Schutzschicht, der zu testende Werkstoff oder das zu testende Material aufgebracht ist.

Eine Schutzschicht kann insbesondere eine Schicht sein, welche im tatsächlichen Einsatz eine andere Schicht oder ein anderes Material schützt, beispielsweise gegen chemische, mechanische und/oder thermische Einwirkung im Heißgas. Bei der hierin beschriebenen Vorgehensweise im Zusammenhang mit einem Sondenkopf kann die Schutzschicht auf ihre diesbezügliche Verwendbarkeit getestet werden. Ein Werkstoff kann beispielsweise ein Material sein, aus welchem Komponenten wie beispielsweise Wärmetauscher oder Wände ausgebildet werden können. Die Verwendbarkeit eines solchen Werkstoffs kann mittels der hierin beschriebenen Vorgehensweise getestet werden.

Es kann auch vorgesehen sein, dass außenseitig auf dem Sondenkopf oder auf einem außenseitig am Sondenkopf ausgebildeten Testabschnitt eine im Heißgas zu testende Schutzschicht, ein im Heißgas zu testender Werkstoff und/oder ein im Heißgas zu testendes Material aufbringbar ist. Der Sondenkopf kann also mit anderen Worten dafür ausgebildet sein, dass eine zu testende Schutzschicht, ein zu testender Werkstoff oder ein zu testendes Material aufgebracht wird. Nach dem Aufbringen entsteht beispielsweise die Situation wie im vorletzten Abschnitt erwähnt. Hierfür können beispielsweise spezielle Oberflächenbeschaffenheiten vorgesehen werden.

Der Testabschnitt kann insbesondere am Rest des Sondenkopfs lösbar befestigt sein. Dies erlaubt ein separates Auswechseln des Testabschnitts. Der zu testende Werkstoff und/oder das zu testende Material kann dadurch bereits analysiert werden, während der Sondenkopf ansonsten bereits wieder verwendet wird. Insbesondere kann der Sondenkopf eine Halterung zum lösbaren Befestigen des Testabschnitts aufweisen.

Die Beobachtungseinheit kann insbesondere dazu ausgebildet sein, den Sondenkopf oder den Testabschnitt ganz oder teilweise zu beobachten. Dies ermöglicht nicht nur die Durchführung eines Materialtests mit anschließender Auswertung außerhalb des heißgasführenden Systems, sondern auch die in-situ-Beobachtung der zu testenden Schicht oder des zu testenden Materials während des Tests im Heißgas. Unter einer Beobachtung des Sondenkopfs oder des Testabschnitts sei dabei insbesondere verstanden, dass die Beobachtungseinheit eine zum Heißgas hin exponierte Fläche beobachtet.

Der Testabschnitt kann insbesondere auf einem Vorsprung ausgebildet sein, welcher vom Rest des Sondenkopfs absteht. Dadurch kann in besonders einfacher Weise eine Beobachtung ermöglicht werden. Der Vorsprung kann beispielsweise integral mit dem Rest des Sondenkopfs ausgebildet sein, oder er kann auch abnehmbar vom Rest des Sondenkopfs ausgebildet sein. Auch ermöglicht der Vorsprung eine Anpassung von Material und/oder Oberflächenbeschaffenheit an die Erfordernisse eines solchen Materialtests. Beispielsweise kann ein Material verwendet werden, auf welchem eine zu testende Schutzschicht, ein zu testender Werkstoff und/oder ein zu testendes Material besonders einfach aufbringbar ist.

Der Vorsprung kann insbesondere am Rest des Sondenkopfs lösbar befestigt sein. Dies erlaubt ein separates Auswechseln des Vorsprungs mit dem Testabschnitt. Der zu testende Werkstoff und/oder das zu testende Material kann dadurch bereits analysiert werden, während der Sondenkopf ansonsten bereits wieder verwendet wird. Insbesondere kann der Sondenkopf eine Halterung zum lösbaren Befestigen des Vorsprungs aufweisen.

Eine Halterung zum lösbaren Befestigen kann beispielsweise als Klemmverbindung oder als Schraubverbindung ausgeführt sein. Insbesondere kann sie derart ausgeführt sein, dass sie auch nach einem Verbleib im Heißgas noch lösbar ist.

In dem Sondenkopf kann insbesondere ein Temperaturmesselement angeordnet sein. Es können auch mehrere, beispielsweise zwei oder mehr, Temperaturmesselemente angeordnet sein. Dies ermöglicht die Überwachung der Temperatur, wobei die Temperaturmesselemente insbesondere dazu ausgebildet sein können, während einer laufenden Beobachtung, oder allgemeiner formuliert während sich der Sondenkopf im Heißgas befindet, eine Temperatur zu erfassen und einen entsprechenden Wert nach außerhalb des heißgasführenden Systems zu melden.

Gemäß einer Ausführung ist innerhalb des Sondenkopfs ein Hohlraum ausgebildet, wobei insbesondere der Sondenkopf durch Einblasen von Luft oder einem Gasmedium in den Hohlraum kühlbar oder temperierbar ist. Bei dem Hohlraum kann es sich insbesondere um den weiter oben bereits erwähnten Innenraum handeln. Dadurch kann der Sondenkopf aktiv auf eine bestimmte Temperatur eingestellt werden, wozu beispielsweise wie erwähnt Luft oder auch ein anderes Gasmedium, also beispielsweise eine Mischung aus bestimmten Gasen oder auch ein einzelnes Gas, verwendet werden kann. Dies ermöglicht es beispielsweise, Komponenten im Sondenkopf zu verwenden, welche ohne Kühlung der im Heißgas herrschenden Temperatur nicht standhalten würden. Außerdem ist es möglich, bei der wie weiter oben bereits beschriebenen Durchführung von Materialtests eine definierte Temperatur einzustellen, bei welcher das Material oder die Schicht getestet werden soll.

Insbesondere kann in dem Hohlraum die Beobachtungseinheit angeordnet sein. Dadurch kann beispielsweise eine Kühlwirkung von in den Hohlraum einströmendem Gas genutzt werden.

Insbesondere kann der Sondenkopf derart ausgebildet sein, dass er keine Flüssigkeitskühlung und/oder keinen flüssigkeitsführenden Kanal aufweist. Dadurch kann auf eine aufwändige Flüssigkeitskühlung verzichtet werden. Es wurde erkannt, dass in typischen Einsatzsituationen wie beispielsweise in einem Kesselhaus eine Luftkühlung leichter zu realisieren ist als eine Flüssigkeitskühlung, da für eine Luftkühlung eine Druckluftzufuhr ausreichend ist, während für eine Flüssigkeitskühlung umfangreiche Pumpen und Wärmetauscher erforderlich sind.

Der Sondenkopf kann insbesondere eine Steuerungsvorrichtung aufweisen oder mit einer Steuerungsvorrichtung verbunden sein. Die Steuerungsvorrichtung kann insbesondere dazu konfiguriert sein, basierend auf Messwerten von zumindest zwei in dem Sondenkopf angeordneten Temperaturmesselementen einen in den Sondenkopf eingeblasenen Strom von Luft oder eines Gasmediums zur Ausbildung eines vorgegebenen Temperaturgradienten in dem Sondenkopf zu steuern. Dadurch kann ein Temperaturgradient ausgebildet werden, welcher einen besonders aussagekräftigen Test beispielsweise einer Schutzschicht, eines Werkstoffs oder eines Materials ermöglicht, da eine Schutzschicht, ein Werkstoff oder ein Material gleichzeitig bei unterschiedlichen, bekannten Temperaturen getestet werden kann. Ein Temperaturgradient kann beispielsweise durch eine erste Temperatur an einem ersten Ort und eine zweite Temperatur an einem zweiten Ort, oder auch durch eine erste Temperatur an einem bestimmten Ort und einen vorgegebenen Anstieg oder ein vorgegebenes Abfallen der Temperatur von diesem Ort aus vorgegeben werden. Die Einhaltung des Temperaturgradienten kann insbesondere mittels der bereits erwähnten Temperaturmesselemente überwacht werden, wozu bevorzugt mindestens zwei Temperaturmesselemente vorhanden sind. Diese können insbesondere an unterschiedlichen Stellen innerhalb des Sondenkopfs oder am Sondenkopf angeordnet sein.

Die Temperaturmesselemente können beispielsweise als Thermoelemente ausgebildet sein, welche beispielsweise auf dem Seebeck-Effekt beruhen können. Auch andere Ausführungen sind jedoch möglich.

Die Beobachtungseinheit kann insbesondere ein Sichtfeld mit einem Blickwinkel von mindestens 100° haben. Dadurch kann eine gleichzeitige Beobachtung eines großen Bereichs ermöglicht werden, was sich für typische Anwendungen als vorteilhaft herausgestellt hat. Auch andere Werte sind hier jedoch möglich.

Als Blickwinkel kann insbesondere ein Winkel von einer Begrenzung des Sichtfelds zu einer gegenüberliegenden Begrenzung des Sichtfelds bezeichnet werden. Ist das Sichtfeld rotationssymmetrisch ist dieser typischerweise unabhängig davon, an welcher Stelle er gemessen wird. Ansonsten kann der Blickwinkel beispielsweise entlang der größten Ausdehnung des Sichtfelds gemessen werden.

Gemäß einer Ausführung ist im Sondenkopf, insbesondere seitlich zum Schutzelement, ein Luftaustrittsspalt ausgebildet. Dadurch kann Luft, oder allgemeiner gesagt ein Gasmedium, durch den Luftaustrittsspalt austreten, so dass eine unmittelbare Ausleitung in die Umgebung des Sondenkopfs, also typischerweise in das Heißgas, möglich ist. Dadurch kann zusätzlich zur Kühlwirkung auch ein Reinigungseffekt des Schutzelements erzielt werden, so dass beispielsweise Partikel davon abgehalten werden können, sich dem Schutzelement überhaupt zu nähern, oder Partikel, welche sich auf dem Schutzelement abgelagert haben, von diesem wieder entfernt werden können. Dadurch kann die Beobachtungsleistung erheblich verbessert werden.

Der Luftaustrittsspalt kann insbesondere als Teil des Sichtfensters ausgebildet sein und/oder fluidisch mit einem Innenraum des Sondenkopfs und/oder mit einem Lufteinlass des Sondenkopfs verbunden sein. Dies ermöglicht die Zuführung von eingeblasener Luft oder einem anderen Gasmedium zu dem Luftaustrittsspalt.

Durch Ableitung des eingeblasenen Gasmediums oder der Luft durch den Luftaustrittsspalt kann insbesondere auch die Ausführung vereinfacht werden, da auf ein Zurückleiten von Luft verzichtet werden kann. Grundsätzlich ist es jedoch auch möglich, einen separaten Kanal zum Zurückleiten von eingeblasenem Gasmedium oder Luft vorzusehen, so dass der Sondenkopf zum Heißgas hin vollständig abgeschlossen werden kann.

Die Beobachtungseinheit kann insbesondere eine elektronische Kamera aufweisen. Mittels einer solchen elektronischen Kamera können unmittelbar Bilder erzeugt werden, welche beispielsweise durch geeignete drahtgebundene oder auch per Funk ausgebildete Verbindungen nach außen, also insbesondere nach außerhalb des heißgasführenden Systems, geleitet werden können. Dort können sie beispielsweise auf einem Bildschirm angezeigt und/oder auf einem Datenträger abgespeichert werden.

Die Beobachtungseinheit kann insbesondere eine Platine aufweisen, auf welcher die Kamera montiert ist, beispielsweise fest oder auch lösbar. Auch mehrere Platinen können entsprechend verwendet werden. Auf der Platine können beispielsweise unterstützende elektronische Komponenten und/oder Stromversorgungskomponenten ausgebildet sein. Sie dient außerdem zum Definieren der Position der Kamera. Die Platine kann beispielsweise über eine oder mehrere Daten- und/oder Versorgungsleitungen mit Einheiten außerhalb des heißgasführenden Systems verbunden sein. Die Kamera kann insbesondere über eine Klemmung der Platine oder der Platinen im Trägerelement ausgerichtet sein. Die Ausrichtung der Platine kann die Ausrichtung des Kameramoduls definieren.

Die Beobachtungseinheit kann insbesondere einen Isolationsblock aufweisen, welcher einen optischen Teil der Kamera und/oder ein Objektiv zumindest teilweise umgibt und/oder auf der Platine aufliegt. Mittels eines solchen Isolationsblocks kann die Beobachtungseinheit und/oder die Kamera gegen zu starke Wärmeeinwirkung isoliert werden, wodurch Komponenten gegen die in Heißgasatmosphäre typischerweise herrschende Temperatur zumindest teilweise abgeschirmt werden können. Es können somit beispielsweise Komponenten verwendet werden, welche nur bei einer niedrigeren Temperatur als diejenige des Heißgases funktionieren, und/oder die Lebensdauer der Komponenten kann verlängert werden.

Die Platine und/oder die Kamera und/oder der Isolationsblock können insbesondere aus dem Sondenkopf entfernbar ausgebildet sein. Dies ermöglicht eine besonders hohe Modularität, wobei beispielsweise nach einer Verwendung beschädigte oder verbrauchte Teile separat ausgetauscht werden können.

An der Kamera kann insbesondere ein wechselbares Objektiv angebracht oder anbringbar sein. Damit können beispielsweise unterschiedliche Brennweiten je nach verwendetem Objektiv zu unterschiedlichen Sichtbereichen führen, so dass eine Anpassung an unterschiedliche Anforderungen leicht möglich ist. Ebenso kann das Objektiv gewechselt werden, wenn es beispielsweise während eines Einsatzes beschädigt wurde.

Die Beobachtungseinheit kann beispielsweise einen Lichtleiter aufweisen, welcher im Sondenkopf durch das Sichtfenster eintretende Strahlung zu einer außerhalb des Sondenkopfs angeordneten Kamera oder einer Bildbeobachtungseinrichtung führt. Mittels eines solchen Lichtleiters kann Licht im Sondenkopf gesammelt werden, welches jedoch nicht wie bei der Positionierung einer elektronischen Kamera bereits im Sondenkopf in elektronische Signale umgesetzt wird, sondern zunächst als solches nach außen geführt wird. Außerhalb des heißgasführenden Systems kann dann beispielsweise ein Detektor, eine elektronische Kamera oder auch eine andere Beobachtungseinrichtung wie beispielsweise ein Projektionsschirm angeordnet sein, so dass eine Beobachtung von Vorgängen innerhalb des heißgasführenden Systems möglich ist.

Der Sondenkopf kann insbesondere eine Außenhülle aufweisen, in welcher das Sichtfenster als Öffnung ausgebildet ist. Diese Außenhülle kann insbesondere dazu ausgebildet sein, in dem heißgasführenden System angeordnet zu werden, was insbesondere eine Stabilität gegen korrosive Gase und/oder Hitzeeinwirkung bedeuten kann. Die Außenhülle kann beispielsweise aus Metall, Edelstahl oder aus einem heißgasbeständigen und/oder temperaturbeständigen Material ausgebildet sein. Ein heißgasbeständiges Material kann beispielsweise einer korrosiven Einwirkung von typischerweise in einem Heißgas zu findenden Substanzen standhalten, insbesondere auch bei Heißgastemperatur. Ein temperaturbeständiges Material kann beispielsweise einer Einwirkung von hoher Temperatur, beispielsweise mindestens 800° C oder mindestens 1.000° C, standhalten, ohne sich zu verformen.

Der Sondenkopf kann beispielsweise einen Flansch zur Befestigung des Sondenkopfs an einem Sondenträger aufweisen. Dadurch kann eine einfache Befestigung des Sondenkopfs erreicht werden, wobei mittels eines Sondenträgers beispielsweise eine Verlagerung des Sondenkopfs von einer Kesselwand weiter nach innen erreicht werden kann. Mittels des Flansches kann der Sondenkopf jedoch auch unmittelbar an einer Kesselwand oder an einer spezifischen Halterung befestigt werden.

Insbesondere kann radial innerhalb des Flansches ein Einlass für Luft ausgebildet sein. Dadurch kann Luft oder ein anderes Gasmedium in den Sondenkopf eingeblasen werden, so dass dieser gekühlt oder allgemeiner gesagt temperiert werden kann.

An dem Flansch können insbesondere eine oder mehrere Bohrungen und/oder Befestigungsmittel zur Verbindung mit einer Kesselwand oder einem Sondenträger ausgebildet sein. Dies erlaubt eine sinnvolle Befestigung.

In dem Sondenkopf kann insbesondere eine außenseitige Isolierschicht ausgebildet sein, welche die Beobachtungseinheit ganz oder teilweise umgibt. Die Beobachtungseinheit kann auf diese Weise gegen aus dem Heißgas resultierende Hitzeeinwirkung zumindest teilweise geschützt werden, wobei beispielsweise auch ein Kühleffekt von eingeblasener Luft oder eingeblasenem Gasmedium unterstützt werden kann. Die außenseitige Isolierschicht kann beispielsweise separat entfernbar ausgebildet sein. Die außenseitige Isolierschicht kann insbesondere innerhalb der Außenhülle ausgebildet sein.

Innerhalb der außenseitigen Isolierschicht kann beispielsweise eine Einsteckhülse angeordnet sein, welche die Beobachtungseinheit ganz oder teilweise umgibt. Dadurch kann eine zusätzliche mechanische Stabilität und/oder ein zusätzlicher mechanischer Schutz erreicht werden. Auch die Einsteckhülse kann separat entfernbar ausgebildet sein.

In dem Sondenkopf kann beispielsweise ein Trägerelement angeordnet sein, welches die Beobachtungseinheit ganz oder teilweise trägt. Dadurch kann ein stabiler und zuverlässiger Aufbau erreicht werden.

Das Trägerelement kann insbesondere langgestreckt ausgebildet sein und/oder zumindest teilweise einen rechteckigen oder quadratischen Querschnitt aufweisen. Dadurch kann die Beobachtungseinheit in vorteilhafter Weise aufgenommen werden. Insbesondere kann die Beobachtungseinheit ganz oder teilweise innerhalb des Trägerelements angeordnet sein.

Das Trägerelement kann beispielsweise eine Blickrichtung der Beobachtungseinheit definieren. Dies ist insbesondere in einem Fall relevant, in welchem die Beobachtungseinheit eine feste Blickrichtung hat. Das Trägerelement kann sich beispielsweise gegen die außenseitige Isolierschicht und/oder die Einsteckhülse abstützen und/oder darin verklemmt sein.

Der Sondenkopf kann insbesondere eine Längsachse aufweisen. Eine Außenhülle des Sondenkopfs kann ganz oder zumindest entlang eines Abschnitts oder im Wesentlichen rotationssymmetrisch zur Längsachse sein. Dies ermöglicht eine einfache und praktikable Ausführung.

Der Sondenkopf kann beispielsweise an einem axialen Ende, welches einer Befestigung des Sondenkopfs axial entgegengesetzt ist, halbkugelförmig ausgeführt sein. Dies erlaubt beispielsweise die Ausbildung eines vorteilhaften Sichtfensters, welches beispielsweise ebenfalls eine Halbkugelform oder die Form eines Segments einer Halbkugel aufweisen kann. Dadurch können vorteilhafte Beobachtungsbereiche erreicht werden. Bei der Befestigung kann es sich beispielsweise um den bereits weiter oben erwähnten Flansch handeln.

Das Sichtfenster und/oder eine das Sichtfenster bildende Öffnung können insbesondere kugelsegmentförmig ausgebildet sein. Dies erlaubt beispielsweise eine vorteilhafte Anpassung an eine um eine Achse oder einen Punkt verschwenkbare Beobachtungseinheit, wobei sich beispielsweise ein Abstand zwischen der Beobachtungseinheit und dem Sichtfenster bzw. der Öffnung nicht oder zumindest nur geringfügig ändert.

Eine Außenhülle des Sondenkopfs kann insbesondere eine kugelsegmentförmige Öffnung für das Sichtfenster aufweisen. Auch hiermit kann eine besonders gute Anpassung an eine verstellbare Beobachtungseinheit erreicht werden.

Eine Blickrichtung der Beobachtungseinheit kann insbesondere quer oder in einem Winkel zwischen 70° und 90° zu einer Längsachse des Sondenkopfs ausgerichtet sein. Dies kann beispielsweise bei fester Blickrichtung im Sondenkopf, jedoch auch bei variabler Blickrichtung ausgebildet sein. Dadurch kann eine Beobachtung quer zur Längsachse erfolgen, wodurch beispielsweise in vorteilhafter Weise Wände oder Übergänge zwischen Heißgaszügen beobachtet werden können.

Der Sondenkopf kann insbesondere quer zu einer Längsachse des Sondenkopfs gesehen einen Durchmesser von maximal 65 mm oder maximal 70 mm aufweisen. Dies ermöglicht ein Durchführen des Sondenkopfs durch typischerweise vorhandene Öffnungen in Wänden von heißgasführenden Systemen, so dass auf umfangreiche Vorarbeiten verzichtet werden kann.

Der Sondenkopf kann insbesondere dauertemperaturbeständig bis mindestens 1.000° C sein. Dies kann insbesondere bedeuten, dass der Sondenkopf beliebig lange einer Temperatur von 1.000° C, insbesondere im Heißgas, ausgesetzt werden kann, ohne dass er sich verformt oder zumindest wesentlich verformt oder in einer die Funktion einschränkenden Weise korrodiert.

Der Sondenkopf kann insbesondere eine Heizeinrichtung zum Beheizen des Schutzelements aufweisen. Eine solche Heizeinrichtung kann dafür sorgen, dass das Schutzelement auf eine höhere Temperatur als die Umgebung gebracht werden kann, beispielsweise im Vergleich zu einem gekühlten Innenraum des Sondenkopfs oder auch im Vergleich zum Heißgas. Dadurch kann ein Desublimieren von Salzen auf der Oberfläche des Schutzelements verhindert werden und es kann gegebenenfalls die Ablösung von eventuell sich auf dem Schutzelement befindenden Salzen oder Partikeln erreicht werden. Die Sicht kann dadurch verbessert werden. Die Heizeinrichtung kann insbesondere elektrisch ausgeführt sein, beispielsweise in Form eines Heizdrahts oder eines flächigen Heizelements.

Das Schutzelement kann beispielsweise aus Glas ausgebildet sein. Dieses hat sich für typische Einsatzzwecke eines Sondenkopfs bewährt. Auch andere Materialien, beispielsweise Kunststoff, sind jedoch möglich.

Das Schutzelement kann insbesondere am Sondenkopf starr befestigt sein. Dies ermöglicht eine einfache Ausführung, wobei es sich gezeigt hat, dass eine Mitführung des Schutzelements auch bei einer verschwenkbaren Beobachtungseinheit nicht zwingend erforderlich ist.

Das Schutzelement kann alternativ jedoch auch mit der Verstelleinrichtung beweglich sein. Anders ausgedrückt kann es von der Verstelleinrichtung bewegt werden, insbesondere synchron mit der Beobachtungseinheit oder der Kamera oder deren Blickrichtung. Dadurch kann eine besondere und/oder definierte Relation zwischen Schutzelement und Beobachtungseinheit erreicht werden, welche auch bei Verschwenken der Beobachtungseinheit nicht verändert wird.

Die Beobachtungseinheit kann insbesondere zur Beobachtung im visuellen Spektrum und/oder im Infrarotspektrum ausgebildet sein. In diesen Spektralbereichen sind typischerweise relevante Informationen über eine Feuerung oder die Beschaffenheit von Wandungen eines heißgasführenden Systems zu erhalten, welche entsprechend ausgewertet werden können.

Die Erfindung betrifft des Weiteren eine Verwendung eines Sondenkopfs wie hierin beschrieben
- zur Beobachtung eines Reinigungsvorgangs in einem heißgasführenden System, und/oder
- zur Beobachtung der Wirkung eines Zusatzes von Hilfsstoffen und/oder Additiven in einem heißgasführenden System, und/oder
- zur Beobachtung der Wirkung einer Eindüsung einer Stickstoffverbindung zur Entstickung, beispielsweise einer Ammoniakeindüsung oder einer Harnstoffeindüsung, in einem heißgasführenden System,
- zur Beobachtung der Wirkung einer Eindüsung einer schwefelhaltigen Verbindung zur Erhöhung einer Sulfatierungsleistung, insbesondere von Schwefeltrioxid, in einem heißgasführenden System,
- zur Beobachtung eines Flammenbilds oder einer Feuerlage in einem heißgasführenden System,
- zur Beobachtung von starker Verschmutzung bzw. Verblockung von Heißgaswegen,
- zur Beobachtung einer feuerfesten Auskleidung und insbesondere von deren Schäden,
- zur Beobachtung von Verschlackung,
- zur Beobachtung einer im Heißgas transportierten Fracht an Partikeln und deren Verteilung im Heißgasquerschnitt, und/oder
- zur Beobachtung, anhand der Partikel und der Belagsausbildung, einer Heißgasströmung, insbesondere von Wirbeln und Rückströmungen.

Ein Reinigungsvorgang kann beispielsweise durch einen Wasserbläser oder einen Rußbläser ausgeführt werden, so dass eine Wandung des heißgasführenden Systems gereinigt wird. Beispielsweise kann dabei eine durch Verschmutzung entstandene Schicht abgetragen werden, welche die Wärmeauskopplung beeinträchtigen kann. Hilfsstoffe oder Additive werden beispielsweise zur Verringerung des Schadstoffgehalts oder zur Verringerung der Korrosion beigegeben. Anhand eines Vergleichs unterschiedlicher Zusatzmengen mittels visueller Beobachtung kann deren Wirksamkeit oder Wirkung bestimmt werden. Eine Eindüsung von schwefelhaltigen Substanzen wie beispielsweise Schwefeltrioxid kann beispielsweise erfolgen, um die Sulfatierungsleistung eines Heißgases zu erhöhen, wodurch korrosive Salze ganz oder teilweise eliminiert werden können. Die Wirkung lässt sich anhand von Veränderungen auf Flächen innerhalb des heißgasführenden Systems beobachten. Ein Flammenbild kann beispielsweise in einem Reaktor oder einer anderen Feuerung beobachtet werden, wo ein Brennstoff verbrannt wird.

Auch andere Verwendungen des erfindungsgemäßen Sondenkopfs sind jedoch möglich.

Insbesondere hat es sich gezeigt, dass der hierin beschriebene Sondenkopf eine besonders hohe Flexibilität zeigt, da er eine Beobachtung von Vorgängen innerhalb eines heißgasführenden Systems in unterschiedlichen Verwendungen und Konstellationen ermöglicht. Im Vergleich zu Ausführungen, welche auf einen stationären Einsatz ausgelegt sind und welche beispielweise auf Wasserkühlung oder große Öffnungen in Kesselwänden angewiesen sind, wird bei dem hierin beschriebenen Sondenkopf somit eine Vielzahl von Beobachtungsmöglichkeiten auch zu Diagnose- oder Testzwecken insbesondere im kurzzeitigen Einsatz ermöglicht, ohne dass dies zu einem besonders hohen Aufwand und entsprechend hohen Kosten führt. Unter einem kurzzeitigen Einsatz kann beispielsweise ein Einsatz von mindestens einer Minute und/oder von höchsten einigen Stunden, beispielsweise höchstens zehn Stunden, verstanden werden.

Untersuchungsgegenstand können insbesondere alle Bauteile und Bereiche innerhalb von Dampferzeugern oder anderen heißgasführenden Systemen sein. Beispielsweise können mit einer hochauflösenden Kamera während des Betriebs der Anlagen deren Feuerraum, die darauffolgenden Leerzüge und der konvektive Teil mit seinen Überhitzern und Economizern betrachtet oder beobachtet werden. Neben dem Zustand der Feuerfestauskleidung und der Funktion von Eindüsungsvorgängen können beispielsweise mit einer Kamera sämtliche Bereiche von Dampferzeugern auf Verschmutzungen hin untersucht werden. Auch die Beobachtung von Reinigungseinrichtungen und die Bewertung und Optimierung anhand der Bilder ist eine mögliche Anwendung. Auch Inspektionen anderer Untersuchungsgegenstände in und um den Kessel, beispielsweise die Heißgasreinigung bzw. Rauchgasreinigung, sind denkbar. Mit den gewonnenen Bildinformationen kann beispielsweise eine Handlungsempfehlung erarbeitet werden.

Insbesondere kann die hierin beschriebene Technik in einem mobilen, zeitlich beispielsweise auf wenige Stunden begrenzten Einsatz verwendet werden. Es hat sich gezeigt, dass der Einsatz von Wasser als Kühlmedium in vielen Anwendungsfällen nicht wünschenswert ist. Vorteilhaft wird somit Luft oder ein anderes Gasmedium verwendet. Dadurch wird beispielsweise die Sicherheit erhöht und es wird eine Entsorgungsproblematik in einem Kesselhaus umgangen. Eine Auflösung einer Beobachtungseinheit und/oder einer Kamera kann insbesondere 1920 x 1080 Pixel oder auch mehr betragen. Dies hat sich für typische Anwendungsfälle als vorteilhaft herausgestellt. Auch eine geringere Auflösung kann jedoch verwendet werden.

Mittels einer Trägersonde, welche auch als Sondenträger bezeichnet werden kann oder mit einem Sondenträger gleichgesetzt werden kann, und dazu passenden Sondenköpfen können die Sondenköpfe insbesondere auch vor Ort gewechselt werden. Dadurch ergibt sich eine hohe Flexibilität für verschiedene Anwendungsfälle. Der Sondenträger kann insbesondere aus einem äußeren Edelstahlrohr mit einem Durchmesser von beispielsweise zwei Zoll ausgebildet sein. Mit diesem Durchmesser sind die gängigen Kesselöffnungen für Inspektionen nutzbar. Im Inneren des Rohrs kann sich insbesondere ein Luftrohr befinden, über welches Kühlluft und ein Datenkabel zum Kamerakopf bzw. zum Sondenkopf geführt werden. Zwischen den beiden Rohren kann sich ein Dämmstoff befinden, damit die Kühlluft auf dem Weg zur Kamera möglichst wenig erwärmt wird. An einem Ende der Sonde können ein Anschluss für die Druckluft und eine Einführung für die Kabel ausgebildet sein. Am anderen Ende kann sich eine Aufnahme befinden, an der die Kameraköpfe und/oder Sondenköpfe beispielsweise mit drei Schrauben befestigt werden können.

Ein Sondenkopf kann insbesondere eine Außenhülle, eine Isolierung und eine Einschubhülse aufweisen. Die Aufgabe der Außenhülle ist insbesondere der Schutz vor dem Heißgas und die luftdichte Verbindung zur Trägersonde. Darunter kann sich eine Dämmschicht gegen den Wärmeeintrag befinden. Die darin befindliche Einschubhülse dient insbesondere als Halterung einer Kamera und leitet die Luft zur optimalen Kühlung an die Kamera. Zur Überwachung der Kühlung kann eine Temperaturmessung an der Kamera angebracht sein, die stetig die aktuelle Temperatur ermittelt. Bei Erreichen eines Grenzwerts kann eine Meldung an eine Steuerung, beispielsweise ein Notebook, ausgegeben werden. Beispielsweise kann bei Überschreiten eines Grenzwerts eine verstärkte Kühlung eingeleitet werden.

In allen Bauteilen kann insbesondere ein Sichtbereich für die Kamera ausgespart bleiben. Zwischen Außenhülle und Einschubhülse kann eine Schutzscheibe fixiert werden. Zwischen Außenhülle und Schutzscheibe kann ein Spalt bleiben, durch den von der Trägersonde und/oder dem Sondenträger hereinströmende und an der Kamera vorbeikommende Kühlluft austreten kann. Damit übernimmt die Luft bei der Sonde sowohl die Aufgabe der Kühlung als auch die der Sauberhaltung der Schutzscheibe.

Die Blickrichtung der Kamera kann bei einem Aufbau beispielsweise 0° zur Sondenachse oder 90° zur Sondenachse oder auch jede beliebige andere Neigung haben. Die Blickrichtung kann die Kameraköpfe bzw. Sondenköpfe im Wesentlichen unterscheiden. Zudem können bei jeder Kamera verschiedene Objektive angebracht werden, wodurch sich weitere Möglichkeiten und eine leichte Anpassung an wechselnde Anforderungen ergeben können. Wechselnde Anforderungen können beispielsweise Größe des Kessels oder Untersuchungsgegenstand sein. Beispielsweise können Neigungen von 0° und 80° ausgeführt werden. Die Kamera kann auch schwenkbar sein. Dadurch muss der Sondenkopf nicht mehr gewechselt werden, wenn unterschiedliche Blickrichtungen im Kessel erforderlich sind. Zudem kann ein Kopf mit einer Kamera und einer zusätzlich integrierten LED oder einer anderen Beleuchtungseinrichtung versehen sein. Die Beleuchtung hat den Vorteil, dass auch dunkle Bereiche inspiziert werden können und die Echtfarben der Verschmutzungen zu sehen sind. Die Farben können Hinweise auf die Belagszusammensetzung geben und damit einen Mehrwert für die Auswertung bieten.

Beispielsweise kann auch eine Auflösung von 2952 x 1944 Pixeln, oder 2560 x 1440 Pixeln entsprechend einer WQHD-Auflösung, verwendet werden. Eingesetzte Objektive können beispielsweise diverse Blickwinkel von 9° bis 200° ermöglichen. Durch eine Empfindlichkeit für Infrarotlicht können, auch ohne zusätzliche LED oder andere Lichtquellen, Aufnahmen in dunklen Bereichen des Kessels ermöglicht werden.

Ein Vorteil des hierin beschriebenen Systems ist insbesondere die hohe Flexibilität in allen Bereichen. Der mobile Einsatz in verschiedenen Anlagen und Anlagenbereichen kann dargestellt werden, da zur Kühlung ausschließlich Druckluft benötigt wird und durch den Einsatz von wechselbaren Sondenköpfen auf unterschiedliche Anforderungen reagiert werden kann. Beispielsweise kann dies verschiedene Blickrichtungen, Blickwinkel oder Zusatzbeleuchtung betreffen. Der kompakte Aufbau durch Anbringung von Dämmmaterial und gezielte Luftführung ermöglicht ein einfaches Handling und den Einsatz an üblichen Kesselöffnungen. Zum Betrieb wird beispielsweise neben dem Sondenkopf und gegebenenfalls weiteren hierin beschriebenen Komponenten lediglich ein Notebook oder ähnliches Gerät zur Live-Anzeige und zum Speichern von Videos verwendet, wobei alternativ auch eine direkte optische Anzeige möglich ist.

Nachfolgend werden weitere Aspekte beschrieben. Diese können als eigenständige Erfindungsaspekte betrachtet werden. Sie können beliebig untereinander kombiniert werden. Sie können jedoch auch mit andernorts hierin beschriebenen Aspekten kombiniert werden.

Die Erfindung betrifft des Weiteren einen Sondenträger zum Tragen eines Sondenkopfs in einem heißgasführenden System. Der Sondenträger weist einen Flansch zur lösbaren Befestigung des Sondenkopfs auf. Der Sondenträger weist insbesondere einen Lagerungsabschnitt zur lösbaren Lagerung oder Befestigung an einer Wand des heißgasführenden Systems auf. Des Weiteren weist der Sondenträger zweckmäßig einen Abstandsabschnitt auf, an welchem der Flansch und der Lagerungsabschnitt angebracht sind.

Mittels eines solchen Sondenträgers ist es möglich, einen Sondenkopf weiter innen in einem heißgasführenden System zu positionieren als dies bei einer unmittelbaren Befestigung des Sondenkopfs an einer Wand eines heißgasführenden Systems möglich wäre. Der Sondenträger kann somit dafür sorgen, dass der Sondenkopf flexibler einsetzbar ist und beispielsweise Prozesse an einer Stelle im Heißgas, welche ansonsten nicht zugänglich wäre, beobachten oder Materialtests durchführen kann.

Der Sondenkopf kann beispielsweise so ausgebildet sein, wie an anderer Stelle hierin beschrieben, insbesondere mit einer Beobachtungseinheit. Es kann sich jedoch auch um einen anderen Sondenkopf handeln, welcher beispielsweise vollständig oder teilweise mit einer zu testenden Schutzschicht, einem zu testenden Werkstoff und/oder mit einem zu testenden Material bedeckt ist, wodurch ein Materialtest oder sonstiger Test oder eine Diagnose durchführbar ist. Enthält der Sondenkopf eine Beobachtungseinheit, kann er zur visuellen Beobachtung eingesetzt werden.

Der Sondenträger kann insbesondere wiederverwendbar sein, so dass er beispielsweise mit unterschiedlichen Sondenköpfen nacheinander oder in unterschiedlichen heißgasführenden Systemen verwendbar ist.

Der Flansch des Sondenträgers kann beispielsweise komplementär zu einem Flansch eines Sondenkopfs ausgeführt sein. Der Lagerungsabschnitt kann beispielsweise dazu ausgeführt sein, mit der Wand des heißgasführenden Systems verschraubt oder verklemmt zu werden, was als Befestigung oder auch als Lagerung verstanden werden kann. Er kann beispielsweise auch dazu ausgeführt sein, in einem Hüllrohr oder einer anderen Einrichtung zu liegen, was beispielsweise als Lagerung verstanden werden kann. Der Abstandsabschnitt sorgt insbesondere für einen Abstand zwischen Flansch und Lagerungsabschnitt, so dass eine gewünschte Länge bzw. ein gewünschter Abstand zwischen Flansch und Lagerungsabschnitt erreicht werden kann.

Der Sondenträger kann insbesondere dazu ausgebildet sein, in dem heißgasführenden System verwendet zu werden, was insbesondere eine entsprechende Beständigkeit gegenüber hoher Temperatur von beispielsweise mindestens 800° C oder mindestens 1.000° C und/oder Beständigkeit gegenüber im Heißgas enthaltenen Substanzen bedeuten kann. Unter Beständigkeit kann insbesondere verstanden werden, dass sich der Sondenträger bei entsprechender Einwirkung nicht verformt und/oder dass seine Funktionalität erhalten bleibt.

Der Flansch kann insbesondere einen oder mehrere Vorsprünge zum Aufsetzen des Sondenkopfs aufweisen. Mittels dieser Vorsprünge kann der Sondenkopf in vorteilhafter Weise gehalten werden. Ein Vorsprung kann insbesondere ringförmig sein. Auch andere Formen sind jedoch möglich. Ein ringförmiger Vorsprung ermöglicht insbesondere eine vorteilhafte Anpassung an einen Sondenkopf mit kreisförmigem Querschnitt.

Der Flansch kann insbesondere ein oder mehrere Löcher und/oder Hinterschneidungen zur Aufnahme von Befestigungsmitteln zur Befestigung des Sondenkopfs aufweisen. Dies ermöglicht eine einfache und zuverlässige Befestigung des Sondenkopfs, beispielsweise durch Verschraubung.

Der Lagerungsabschnitt kann beispielsweise zur Befestigung an einer Kesselwand und/oder an oder in einer Öffnung einer Kesselwand ausgebildet sein. Dies ermöglicht eine unmittelbare Befestigung des Lagerungsabschnitts an einer Kesselwand, so dass der Sondenträger die Position des Sondenkopfs relativ zur Kesselwand definieren kann.

Der Lagerungsabschnitt kann insbesondere einen nach außen abstehenden Vorsprung zur Befestigung an der Wand aufweisen. Dies ermöglicht eine stabile Befestigung, beispielsweise auch dann, wenn der Sondenträger horizontal oder in einem ähnlichen oder anderen Winkel nach innen absteht.

Der Lagerungsabschnitt kann insbesondere ein oder mehrere Löcher und/oder Hinterschneidungen und/oder Spannbügel und/oder Klemmverschlüsse zur Aufnahme von Befestigungsmitteln zur Befestigung an der Wand aufweisen. Derartige Befestigungsmöglichkeiten haben sich für typische Einsatzszenarien in heißgasführenden Systemen bewährt.

Der Abstandsabschnitt kann insbesondere rohrförmig ausgebildet sein. Dies ermöglicht eine einfache Herstellung und einen leichten Transport sowie eine besonders hohe Stabilität in alle Richtungen.

Lagerungsabschnitt, Abstandsabschnitt und Flansch können auch durchgängig ausgeführt sein. Sie müssen also nicht zwingend optisch klar voneinander abgrenzbar sein. Auch eine abgrenzbare Ausführung ist jedoch möglich, beispielsweise durch die Verwendung unterschiedlicher Materialien, Materialstärken oder Abgrenzungen wie Kerben oder Vorsprünge.

In dem Abstandsabschnitt oder in dem Sondenträger kann insbesondere mindestens ein Kanal zur Führung von Luft und/oder zur Aufnahme von Gestänge oder Leitungen ausgebildet sein. Der Kanal kann sich insbesondere vom Flansch zum Lagerungsabschnitt erstrecken. Mittels eines solchen Kanals kann Luft oder ein anderes Gasmedium zum Sondenkopf geleitet werden, welches den Sondenkopf beispielsweise kühlen oder temperieren kann. Mittels eines Gestänges kann beispielsweise eine in dem Sondenkopf befindliche Verstelleinrichtung betätigt werden, wobei eine Verstelleinrichtung beispielsweise einen Blickwinkel einer Beobachtungseinrichtung verstellen kann. Leitungen können beispielsweise elektrische Leitungen sein, über welche Daten übertragen oder eine Stromversorgung bereitgestellt werden können.

Der Kanal kann insbesondere ganz oder teilweise von einer Isolationsschicht umgeben sein. Eine solche Isolationsschicht kann eine wärmedämmende Wirkung zwischen Kanal und umgebendem Heißgas erzeugen, so dass der Kanal beispielsweise auf einer kühleren Temperatur gehalten werden kann.

Die Isolationsschicht kann insbesondere aus Keramik, aus einem keramischen Körper, aus mehreren keramischen Körpern, aus einem keramischen Granulat, aus einem Keramikfasermaterial, aus Kohlefaser oder aus Mineralfasermaterial ausgebildet sein. Auch andere Materialien, insbesondere gut isolierende Materialien, können jedoch verwendet werden. Dies gilt ebenso für andere Isolationsschichten oder andere verwendete isolierende Komponenten.

Zwischen Kanal und Isolationsschicht kann insbesondere eine Kanalwand angeordnet sein. Diese kann für eine zusätzliche mechanische Stabilität sorgen. Die Isolationsschicht kann insbesondere innerhalb einer Hülle des Sondenträgers angeordnet sein.

Der Kanal kann insbesondere im Querschnitt mittig im Sondenträger angeordnet sein. Dies ermöglicht eine rundum gleichmäßige Isolationswirkung umgebender Materialien. Außerdem ermöglicht es eine einfache Ausführung.

In dem Abstandsabschnitt oder in dem Sondenträger kann insbesondere mindestens ein weiterer Kanal zur Führung von Luft oder eines anderen Gasmediums und/oder zur Aufnahme von Gestänge oder Leitungen ausgebildet sein. Der weitere Kanal ist insbesondere zum Kanal separat. Der weitere Kanal kann sich insbesondere vom Flansch zum Lagerungsabschnitt erstrecken. Mittels des weiteren Kanals kann insbesondere eine zusätzliche Funktionalität, beispielsweise zum Rückführen von eingeblasener Luft oder zur Aufnahme von weiterem Gestänge oder weiteren Leitungen, bereitgestellt werden.

Der weitere Kanal kann insbesondere den Kanal im Querschnitt ganz oder teilweise umgeben. Dies ermöglicht eine einfache Ausführung und auch eine Isolation des Kanals durch den weiteren Kanal.

Der weitere Kanal kann insbesondere ganz oder teilweise von einer Isolationsschicht umgeben sein. Auch hierdurch kann eine Isolierung des weiteren Kanals gegenüber umgebendem Heißgas erreicht werden.

Bezüglich der Materialien sei auf die weiter oben bereits gegebenen Ausführungen zur Isolationsschicht verwiesen.

Der Kanal und/oder der weitere Kanal können insbesondere innerhalb des Flansches einen Auslass zum Einblasen von Luft oder eines Gasmediums in einen aufgesteckten Sondenkopf und/oder zum Auslassen von Gestänge oder Leitungen in den Sondenkopf aufweisen. Dadurch können Luft, ein Gasmedium, Leitungen oder Gestänge in den Sondenkopf eingeleitet werden, wo sie die bereits erwähnten und insbesondere gewünschten Wirkungen erreichen können.

Der Kanal und/oder der weitere Kanal können insbesondere innerhalb des Lagerungsabschnitts oder am Lagerungsabschnitt einen Einlass zum Einblasen von Luft in den Kanal oder in den weiteren Kanal und/oder zum Einlassen von Gestänge oder Leitungen in den Kanal oder den weiteren Kanal aufweisen. Dies erlaubt ein entsprechend einfaches Einführen von Luft, Gestänge oder Leitungen in den Kanal oder den weiteren Kanal.

Der Einlass kann insbesondere als über den Rest des Sondenträgers vorstehender Vorsprung ausgeführt sein. Dies erlaubt eine besonders hohe Stabilität und eine einfache Verwendung. Der Einlass kann insbesondere rohrförmig ausgeführt sein. Damit kann er sich insbesondere an runde Querschnitte des Sondenträgers gut anpassen. Der Einlass kann aus der Kanalwand ausgebildet sein, insbesondere durchgängig mit dem Rest des Kanals.

Gemäß einer bevorzugten Ausführung weist der Sondenträger ein Auslassrohr auf, welches über den Flansch hinaussteht und mit dem Kanal fluidisch verbunden ist. Dadurch kann der Kanal verlängert werden und es kann ein Ausblasen von Luft oder eines anderen Gasmediums weiter entfernt vom Flansch, beispielsweise innerhalb des Sondenkopfs, erfolgen. Das Auslassrohr kann insbesondere einstückig mit einer Kanalwand ausgeführt sein. Es kann insbesondere den Kanal linear verlängern.

Insbesondere kann bzw. können der Kanal und/oder der weitere Kanal zwischen Lagerungsabschnitt und Flansch durchgängig umschlossen ausgeführt sein. Dies erlaubt eine ununterbrochene Luftleitung und eine Abschirmung beispielsweise gegenüber eintretendem Heißgas.

Von dem Abstandsabschnitt können insbesondere eine oder mehrere Stützen zum Abstützen an einem umgebenden Hüllrohr und/oder an anderen Elementen abstehen. Die Stützen können insbesondere vom Sondenträger aus nach außen abstehen. Dadurch kann ein separates Abstützen des Abstandsabschnitts bzw. des Sondenträgers erreicht werden. Beispielsweise können sich die Stützen an einem umgebenden Hüllrohr abstützen, welches den Sondenträger ganz oder teilweise umgeben kann und somit auch für dessen Schutz gegenüber Heißgas und/oder hoher Temperatur sorgen kann. Auch ein Abstützen an anderen Elementen wie beispielsweise unmittelbar an einer Kesselwand ist jedoch möglich.

Die Stütze oder die Stützen kann bzw. können insbesondere vom Abstandsanschnitt aus nach außen abstehen.

Der Abstandsabschnitt kann insbesondere eine außenseitige Hülle aufweisen. Diese Hülle kann insbesondere aus Edelstahl oder aus anderem heißgas- und/oder temperaturbeständigen Material ausgebildet sein. Dadurch kann ein guter außenseitiger Schutz des Sondenträgers erreicht werden. Die Hülle kann auch am Flansch und/oder am Lagerungsabschnitt vorhanden sein.

Der Lagerungsabschnitt kann insbesondere eine nach außen vorstehende Abdichtscheibe, eine Lagerungsscheibe oder ein Adapterelement zum Abdichten einer in der Wand ausgebildeten Öffnung aufweisen. Dadurch kann eine Öffnung in der Wand, beispielsweise einer Kesselwand eines heißgasführenden Systems, größer ausgebildet sein als der Lagerungsabschnitt und/oder Abstandsabschnitt des Sondenträgers, so dass ein einfaches Einbringen möglich ist, der Sondenträger jedoch mit der Abdichtscheibe oder dem Adapterelement gleich ein erforderliches Mittel zum Abdichten der Öffnung bereitstellt. Dadurch kann in einfacher Weise bei einer Untersuchung ein Abdichten der Wand erreicht werden, ohne dass zusätzliche Komponenten benötigt werden. Eine Abdichtscheibe kann insbesondere einstückig mit dem Sondenträger ausgeführt sein. Eine Lagerungsscheibe kann insbesondere am Sondenträger lösbar befestigt sein.

Der Sondenträger kann insbesondere dauertemperaturbeständig bis mindestens 1.000° C sein. Auf die diesbezüglichen Ausführungen mit Bezug auf den Sondenkopf sei verwiesen.

Insbesondere kann der Sondenträger aus Stahl, Keramik, Kohlefaser, Kohlefaserverbundwerkstoff, Verbundwerkstoff und/oder Mineralfaser ausgebildet sein. Dies erlaubt die Erreichung der hier typischerweise geforderten Eigenschaften, insbesondere in Bezug auf Beständigkeit gegen hohe Temperatur und/oder Korrosion. Ebenso kann der hierin beschriebene Sondenkopf aus Stahl, Keramik, Kohlefaser, Kohlefaserverbundwerkstoff, Verbundwerkstoff und/oder Mineralfaser ausgebildet sein. Gleiches gilt für ein Hüllrohr. Es kann jeweils nur ein Material verwendet werden, oder es können mehrere Materialien kombiniert werden.

Die Erfindung betrifft des Weiteren eine Sondenanordnung, welche einen Sondenkopf und einen Sondenträger wie hierin beschrieben aufweist. Der Sondenkopf ist dabei insbesondere an dem Flansch des Sondenträgers lösbar befestigt.

Mittels einer solchen Sondenanordnung können die bereits beschriebenen Vorteile eines Sondenträgers in einfacher Weise erreicht werden. Der Sondenkopf kann beispielsweise wie hierin beschrieben ausgebildet sein, wobei auf alle beschriebenen Ausführungen und Varianten zurückgegriffen werden kann. Auch bezüglich des Sondenträgers kann auf alle hierin beschriebenen Ausführungen und Varianten zurückgegriffen werden. Insbesondere kann der Sondenkopf an einer durch den Sondenträger definierten Stelle im heißgasführenden System positioniert werden, welche ohne den Sondenträger nicht zugänglich wäre.

Der Sondenkopf kann insbesondere einen Testabschnitt aufweisen, auf welchem eine im Heißgas zu testende Schutzschicht, ein im Heißgas zu testender Werkstoff und/oder ein im Heißgas zu testendes Material aufbringbar oder aufgebracht ist. In dem Sondenkopf kann auch eine Beobachtungseinheit zur visuellen Beobachtung angeordnet sein. Auf die diesbezüglichen Ausführungen und Varianten, welche an anderer Stelle hierin beschrieben sind, sei verwiesen.

Die Sondenanordnung kann eine Mehrzahl von Sondenträgern aufweisen, wobei an einem der Sondenträger der Sondenkopf befestigt ist, und wobei jeder Sondenträger, der nicht an einer Wand zu befestigen ist, am Flansch eines anderen Sondenträgers befestigt ist. Dadurch kann eine Kaskadierung erreicht werden, so dass die abstandserzeugende Wirkung mehrerer Sondenträger gleichzeitig verwendet werden kann. Damit können beispielsweise noch weiter innen liegende Stellen im heißgasführenden System mit dem Sondenkopf erreicht werden. Typischerweise wird dabei einer der Sondenträger an der Wand befestigt, und alle anderen Sondenträger werden am jeweils in der Reihe vorhergehenden Sondenträger, insbesondere an dessen Flansch, befestigt. Am in der Reihe letzten bzw. am weitesten innen angeordneten Sondenträger wird dann der Sondenkopf befestigt.

Die Sondenanordnung kann insbesondere ein Ausblasrohr aufweisen, welches lösbar mit dem Sondenträger verbunden ist und den Kanal in den Sondenkopf fluidisch verlängert. Ein solches Ausblasrohr kann ähnlich zu einem weiter oben erwähnten Auslassrohr ausgeführt sein, ist jedoch im Gegensatz dazu vom Sondenträger lösbar.

Die Erfindung betrifft des Weiteren ein heißgasführendes System. Das heißgasführende System weist eine Wand auf, welche das heißgasführende System umgibt und in welcher mindestens eine Öffnung ausgebildet ist. Das heißgasführende System weist mindestens eine Sondenanordnung wie hierin beschrieben auf, wobei ein Sondenträger der Sondenanordnung mit seinem Lagerungsabschnitt in der Öffnung befestigt ist, so dass der Sondenkopf der Sondenanordnung innerhalb des heißgasführenden Systems angeordnet ist. Ein solches heißgasführendes System kann mittels des beschriebenen Sondenkopfs in besonders vorteilhafter Weise überwacht werden oder es können Diagnoseaufgaben ausgeführt werden. Bezüglich der Sondenanordnung kann auf alle hierin beschriebenen Ausführungen und Varianten zurückgegriffen werden. Bei der Wand kann es sich insbesondere um eine Kesselwand handeln.

Die Erfindung betrifft des Weiteren eine Verwendung eines Sondenträgers wie hierin beschrieben zur Positionierung eines Sondenkopfs in einem heißgasführenden System, einem Kessel oder einem Heißgasabzug. Dies entspricht einer bevorzugten Verwendung des hierin beschriebenen Sondenträgers, so dass eine vorteilhafte Positionierung eines Sondenkopfs im heißgasführenden System auch an Stellen möglich ist, welche ohne den Sondenträger nicht zugänglich wären.

Die Erfindung betrifft des Weiteren ein Verfahren zum Beobachten eines heißgasführenden Systems, wobei das Verfahren folgende Schritte aufweist:
- Anbringen eines Sondenkopfs auf einem Sondenträger wie hierin beschrieben,
- Einbringen des Sondenträgers und des Sondenkopfs in das heißgasführende System,
- Beobachten des heißgasführenden Systems mittels einer in dem Sondenkopf befindlichen Beobachtungseinheit,
- Entnahme des Sondenträgers und des Sondenkopfs aus dem heißgasführenden System,
- Aufbringen eines anderen Sondenkopfs auf den Sondenträger, und
- Einbringen des Sondenträgers und des anderen Sondenkopfs in das heißgasführende System.

Damit kann eine besonders hohe Flexibilität erreicht werden. Insbesondere kann der Sondenträger wiederverwendet werden. Der Sondenkopf und/oder der andere Sondenkopf können insbesondere wie hierin beschrieben ausgeführt sein, wobei auf alle beschriebenen Ausführungen und Varianten zurückgegriffen werden kann. Auch bezüglich des Sondenträgers kann auf alle hierin beschriebenen Ausführungen und Varianten zurückgegriffen werden. Das Einbringen kann insbesondere in einem Zustand erfolgen, in welchem der jeweilige Sondenkopf auf dem Sondenträger befestigt ist und/oder daran angebracht ist.

Die Erfindung betrifft des Weiteren eine Diagnosevorrichtung für ein heißgasführendes System. Die Diagnosevorrichtung weist einen Sondenkopf auf. Die Diagnosevorrichtung weist ein Hüllrohr auf, welches einen Befestigungsbereich zur Befestigung an einer Wand des heißgasführenden Systems aufweist. Die Diagnosevorrichtung weist eine Halterung auf, welche dazu konfiguriert ist, den Sondenkopf relativ zum Hüllrohr zu positionieren.

Durch eine solche Diagnosevorrichtung können Diagnosen durchgeführt werden, welche nur mit einem Sondenkopf ohne Hüllrohr nicht durchführbar wären. Hierzu kann das Hüllrohr eingesetzt werden, welches für eine gezielte, zumindest zeitlich begrenzte oder teilweise Abschirmung des Sondenkopfs vom Heißgas eingesetzt werden kann. Mögliche Ausführungen werden weiter unten beschrieben werden. Bei dem Sondenkopf kann es sich insbesondere um einen Sondenkopf wie hierin an anderer Stelle beschrieben handeln. Auf alle beschriebenen Ausführungen und Varianten kann zurückgegriffen werden. Der Sondenkopf kann insbesondere dazu ausgebildet sein, das heißgasführende System visuell zu beobachten und/oder einen Materialtest durchzuführen. Auch eine Diagnose von Stoffen wie Partikeln oder gelösten Salzen ist möglich.

Eine Diagnosevorrichtung kann insbesondere für die zeitlich begrenzte Untersuchung von Systemen dienen und grenzt sich damit von kontinuierlich verwendeten Einrichtungen zur Prozesssteuerung oder Feuerungssteuerung ab. Ebenso wird auch der hierin offenbarte Sondenkopf typischerweise für eine zeitlich begrenzte Untersuchung von Systemen verwendet.

Das Hüllrohr kann insbesondere als zumindest teilweise und/oder zeitlich begrenzte Abschirmung des Sondenkopfs gegenüber umgebendem Heißgas dienen. Mögliche Ausführungen sind weiter unten näher beschrieben. Der Befestigungsbereich kann insbesondere eine stabile Befestigung an einer Wand des heißgasführenden Systems ermöglichen.

Bei der Halterung kann es sich insbesondere um einen Sondenträger wie hierin an anderer Stelle beschrieben handeln. Bezüglich des Sondenträgers kann auf alle hierin beschriebenen Ausführungen und Varianten zurückgegriffen werden. Auch andere mögliche Ausführungen einer Halterung sind jedoch verwendbar.

Die Halterung kann zumindest teilweise oder auch vollständig innerhalb des Hüllrohrs angeordnet sein. Dies ermöglicht eine Abschirmung der Halterung durch das Hüllrohr, so dass die Halterung nicht vollständig mit dem umgebenden Heißgas in Kontakt kommt.

Der Sondenkopf kann insbesondere an der Halterung lösbar befestigt sein. Dies erlaubt ein einfaches Austauschen des Sondenkopfs. Beispielsweise kann dies durch Schraubverbindungen oder Klemmverbindungen erreicht werden.

Grundsätzlich handelt es sich bei dem Sondenkopf und der Halterung um zwei separate Elemente, welche zwar miteinander verbunden bzw. aneinander befestigt werden können, jedoch kein einstückig durchgängiges Element bilden.

Das Hüllrohr kann insbesondere eine thermische Isolationsschicht aufweisen. Diese kann beispielsweise entlang der gesamten Länge des Hüllrohrs und/oder entlang des gesamten Umfangs des Hüllrohrs ausgebildet sein, oder kann auch nur entlang eines Teils von Länge und/oder Umfang des Hüllrohrs ausgebildet sein. Mit einer thermischen Isolationsschicht kann insbesondere eine thermische Abschirmung von in dem Hüllrohr befindlichen Komponenten, insbesondere der Halterung und/oder des Sondenkopfs, gegenüber umgebendem Heißgas erreicht werden.

Die thermische Isolationsschicht kann insbesondere umfangsmäßig umlaufend im Hüllrohr ausgebildet sein. Dies ermöglicht eine entlang des Umfangs gleichmäßige Isolationswirkung. Die thermische Isolationsschicht kann sich insbesondere über eine gesamte Länge des Hüllrohrs erstrecken. Dies ermöglicht eine Isolationswirkung entlang der gesamten Länge. Auch ein Erstrecken entlang nur eines Teilbereichs des Hüllrohrs ist jedoch möglich.

Die thermische Isolationsschicht kann insbesondere aus Keramik, aus einem keramischen Körper, aus mehreren keramischen Körpern, aus einem keramischen Granulat, aus einem Keramikfasermaterial, aus Kohlefaser oder aus Mineralfasermaterial ausgebildet sein. Derartige Materialien haben sich als beständig in korrosiver Atmosphäre bei hoher Temperatur erwiesen. Auch die Verwendung anderer Materialien ist jedoch möglich.

Die Diagnosevorrichtung kann eine sich vom Hüllrohr nach außen erstreckende Dichtscheibe, Lagerungsscheibe oder ein Adapterelement zur Abdichtung einer in der Wand ausgebildeten Öffnung außerhalb des Hüllrohrs aufweisen. Die Dichtscheibe, die Lagerungsscheibe oder das Adapterelement kann sich insbesondere radial vom Hüllrohr nach außen erstrecken. Dadurch kann insbesondere erreicht werden, dass das Hüllrohr mit der Dichtscheibe, der Lagerungsscheibe oder dem Adapterelement bereits ein Element mitbringt, mit welchem eine größere Öffnung in der Wand abgedichtet werden kann. Die größere Öffnung kann somit zum einfachen Einführen der Diagnosevorrichtung verwendet werden, und kann ohne weitere großflächig abdichtende Dichtungskomponenten abgedichtet werden. Ein Austreten von Heißgas aus der Öffnung wird dadurch wirkungsvoll verhindert. Eine Dichtscheibe kann insbesondere fest mit dem Hüllrohr verbunden sein. Eine Lagerungsscheibe kann insbesondere lösbar mit dem Hüllrohr verbunden sein.

Die Dichtscheibe oder Lagerungsscheibe kann insbesondere zur Befestigung des Hüllrohrs an der Wand ausgebildet sein. Somit kann auch eine mechanische Stabilität des Hüllrohrs bzw. der Diagnosevorrichtung durch die Dichtscheibe oder Lagerungsscheibe vermittelt werden.

Die Diagnosevorrichtung kann insbesondere eine sich zwischen Halterung und Hüllrohr erstreckende Dichtung zur Abdichtung eines Bereichs zwischen Halterung und Hüllrohr aufweisen. Dadurch kann ein Austreten von Heißgas zwischen Halterung und Hüllrohr verhindert werden. Die Dichtung kann insbesondere am Befestigungsbereich angeordnet sein.

An dem Befestigungsbereich kann mindestens eine Einblasöffnung zum Einblasen von Luft zwischen Hüllrohr und Halterung ausgebildet sein. Es kann also eine solche Einblasöffnung ausgebildet sein oder es können mehrere Einblasöffnungen ausgebildet sein. Dadurch kann Luft oder ein anderes Gasmedium zwischen Hüllrohr und Halterung eingeblasen werden, so dass der Bereich zwischen Hüllrohr und Halterung unter einen gezielten Gasstrom gesetzt werden kann. Dieser Gasstrom fließt typischerweise von der Wand des heißgasführenden Systems in das Innere des heißgasführenden Systems, und er tritt typischerweise in das Heißgas aus. Dadurch wird ein Eindringen von Heißgas in einen Zwischenraum zwischen Hüllrohr und Halterung verhindert oder zumindest verringert. Dies erlaubt eine besonders vorteilhafte Abschirmung von Komponenten, welche sich innerhalb des Hüllrohrs befinden, gegen die korrosive Wirkung des Heißgases.

Die Diagnosevorrichtung kann einen Luftschlauch aufweisen. Dieser kann insbesondere an der Einblasöffnung außenseitig angeschlossen sein. Dadurch kann ein einfacher Anschluss an eine Luftzuführung erreicht werden.

Die Dichtung kann insbesondere den Bereich zwischen Halterung und Hüllrohr mit Ausnahme der Einblasöffnung oder der Einblasöffnungen vollständig abdichten. Dies erlaubt eine Absicherung gegen austretendes Heißgas. Wenn es sich bei dem heißgasführenden System beispielsweise um einen Reaktor oder um eine andere unter Überdruck stehende Einheit handelt, kann die Dichtung insbesondere dafür ausgebildet sein, dem Überdruck standzuhalten. Dadurch kann die Diagnosevorrichtung insbesondere auch in unter Druck stehenden Systemen verwendet werden. Dies kann als eigenständiger Erfindungsaspekt betrachtet werden.

Die Einblasöffnung kann insbesondere in der Dichtung ausgebildet sein. Dadurch kann grundsätzlich eine Abdichtung erreicht werden, wobei trotzdem ein gezieltes Einblasen von Luft oder eines anderen Gasmediums möglich ist.

Die Diagnosevorrichtung kann auch eines oder mehrere weitere Hüllrohre aufweisen, wobei eines oder mehrere der weiteren Hüllrohre zumindest teilweise innerhalb des Hüllrohrs angeordnet sein können. Es können auch eines oder mehrere der weiteren Hüllrohre zumindest teilweise außerhalb des Hüllrohrs angeordnet sein. Hierdurch können beispielsweise Verschachtelungen mehrerer Hüllrohre ineinander erreicht werden, wodurch die thermische Abschirmwirkung verbessert werden kann. Aussagen bezüglich Ausbildung des Hüllrohrs gelten für das weitere Hüllrohr oder die weiteren Hüllrohre entsprechend. Dies betrifft beispielsweise eine Isolierung oder andere Merkmale.

Die Halterung kann insbesondere am Hüllrohr befestigt sein. Dies erlaubt eine einfache Ausführung. Die Halterung kann jedoch auch unmittelbar an der Wand befestigbar oder befestigt sein. Dies erlaubt eine besonders hohe Stabilität zwischen Halterung und Wand.

Die Halterung kann insbesondere dazu ausgebildet sein, den Sondenkopf relativ zum Hüllrohr zu verschieben. Dies erlaubt eine besondere Durchführung von Materialtests oder sonstigen Tests, wobei beispielsweise durch Verschieben der Sondenkopf nur für einen definierten Zeitraum vollständig von Heißgas umspült wird und sich ansonsten innerhalb des Hüllrohrs befinden kann, durch welches er ganz oder teilweise vom Heißgas abgeschirmt werden kann.

Die Halterung kann insbesondere dazu ausgebildet sein, den Sondenkopf entlang einer Längsrichtung des Hüllrohrs zu verschieben. Dadurch kann eine besonders einfache Verfahrensführung bei Materialtests für vorbestimmte Zeitdauern erreicht werden. Insbesondere kann die Halterung relativ zum Hüllrohr verschiebbar gelagert sein. Dies ermöglicht ein einfaches Verschieben. Beispielsweise können Gleitlager, Kugellager, Rollenlager oder andere Lager verwendet werden.

Die Halterung kann insbesondere von außerhalb der Wand, von außerhalb des heißgasführenden Systems und/oder von außerhalb des Hüllrohrs zum Verschieben betätigbar sein. Dadurch kann ein einfaches Betätigen durch einen Bediener erfolgen, welcher sich außerhalb des heißgasführenden Systems befindet. Dies kann insbesondere auch während des Betriebs des heißgasführenden Systems erfolgen, d.h. während Heißgas entsteht und geführt wird.

Die Diagnosevorrichtung kann eine oder mehrere innere Stützen aufweisen, welche zwischen Halterung und Hüllrohr zum Abstützen der Halterung gegen das Hüllrohr angeordnet sind. Dadurch kann die Stabilität der Halterung erhöht werden, wodurch beispielsweise längere Distanzen überbrückbar sind, ohne dass es zu einem Abknicken oder einem Verbiegen kommt.

Die Diagnosevorrichtung kann auch eine oder mehrere äußere Stützen zum Abstützen des Hüllrohrs oder eines weiteren Hüllrohrs an einem externen Element oder an einem anderen Hüllrohr aufweisen. Die äußeren Stützen können dabei insbesondere die Stabilität der Diagnosevorrichtung insgesamt erhöhen, wobei sie sich beispielsweise an einem weiteren Hüllrohr oder an einer Kesselwand oder einem anderen Element innerhalb des heißgasführenden Systems abstützen können.

Die Diagnosevorrichtung kann auch eine oder mehrere Aufhängungen zum Aufhängen des Hüllrohrs oder eines weiteren Hüllrohrs an einem externen Element oder an einem anderen Hüllrohr aufweisen. Dies erlaubt insbesondere eine Befestigung an einer Decke oder einer anderen Komponente wie beispielsweise einem Wärmetauscher oder Wärmetauscherrohren über dem Hüllrohr oder den Hüllrohren.

Die Halterung kann insbesondere als Sondenträger ausgeführt sein. Die Halterung kann auch als Verkettung mehrerer Sondenträger ausgeführt sein. Diese können beispielsweise linear hintereinander verwendet werden, beispielsweise wie es an anderer Stelle hierin beschrieben ist. Bezüglich des Sondenträgers kann auf alle hierin beschriebenen Ausführungen und Varianten zurückgegriffen werden.

Der Sondenträger kann beispielsweise einen Flansch zur lösbaren Befestigung des Sondenkopfs, einen Lagerungsabschnitt zur lösbaren Befestigung oder Lagerung an der Wand des heißgasführenden Systems oder am Hüllrohr und einen Abstandsabschnitt, an welchem der Flansch und der Lagerungsabschnitt angebracht sind, aufweisen. Der Flansch kann insbesondere einen oder mehrere Vorsprünge zum Aufsetzen des Sondenkopfs aufweisen. Der Abstandsabschnitt kann insbesondere rohrförmig ausgebildet sein. In dem Abstandsabschnitt kann mindestens ein Kanal zur Führung von Luft oder eines anderen Gasmediums und/oder zur Aufnahme von Gestänge oder Leitungen ausgebildet sein. Der Kanal kann sich vom Flansch zum Lagerungsabschnitt erstrecken. Der Kanal kann ganz oder teilweise von einer Isolationsschicht umgeben sein. Der Kanal kann insbesondere innerhalb des Flansches einen Auslass zum Einblasen von Luft oder eines anderen Gasmediums in den Sondenkopf und/oder zum Auslassen von Gestänge oder Leitungen in den Sondenkopf aufweisen. Der Kanal kann innerhalb des Lagerungsabschnitts einen Einlass zum Einblasen von Luft oder eines anderen Gasmediums in den Kanal und/oder zum Einlassen von Gestänge oder Leitungen in den Kanal aufweisen. Der Einlass kann als über den Rest des Sondenträgers vorstehender Vorsprung und/oder rohrförmig ausgeführt sein. Bezüglich der Ausbildung des Sondenträgers sei im Übrigen auf die an anderer Stelle hierin gegebenen Ausführungen verwiesen, wobei alle Varianten entsprechend angewandt werden können. Der Kanal kann insbesondere innerhalb des Sondenträgers, oder innerhalb der Halterung, angeordnet sein.

Der Sondenkopf kann einen Testabschnitt aufweisen, auf welchen eine im Heißgas zu testende Schutzschicht, ein im Heißgas zu testender Werkstoff und/oder ein im Heißgas zu testendes Material aufbringbar oder aufgebracht ist. In dem Sondenkopf kann eine Beobachtungseinheit zur visuellen Beobachtung angeordnet sein. Bezüglich des Sondenkopfs sei auf die an anderer Stelle hierin gegebenen Ausführungen verwiesen, wobei alle Varianten entsprechend angewandt werden können.

Die Erfindung betrifft des Weiteren ein heißgasführendes System. Das heißgasführende System weist eine Wand auf, welche das heißgasführende System umgibt und in welcher mindestens eine Öffnung ausgebildet ist. Das heißgasführende System weist eine Diagnosevorrichtung wie hierin beschrieben auf, wobei auf alle hierin beschriebenen Ausführungen und Varianten zurückgegriffen werden kann. Das Hüllrohr der Diagnosevorrichtung ist insbesondere mit seinem Befestigungsbereich in der Öffnung befestigt und die Halterung positioniert den Sondenkopf innerhalb des heißgasführenden Systems. In einem solchen heißgasführenden System kann aufgrund der bereits beschriebenen Funktionalität der Diagnosevorrichtung besonders einfach und/oder mit speziellen Merkmalen eine Diagnose wie beispielsweise ein Materialtest durchgeführt werden, beispielsweise nur für einen kurzen Zeitraum.

Die Erfindung betrifft des Weiteren ein Verfahren zum Durchführen eines Tests und/oder einer visuellen Beobachtung in Heißgas, welches folgende Schritte aufweist:
- Bereitstellen eines Sondenkopfs, auf welchem eine zu testende Schutzschicht, ein zu testender Werkstoff und/oder ein zu testendes Material aufgebracht ist und/oder in welchem eine Beobachtungseinheit zur visuellen Beobachtung angeordnet ist,
- Einbringen des Sondenkopfs in ein Hüllrohr, welches in das Heißgas hineinragt,
- Verschieben des Sondenkopfs aus dem Hüllrohr heraus, so dass der Sondenkopf sich für eine vorbestimmte Zeit vollständig außerhalb des Hüllrohrs im Heißgas befindet,
- nach Ablauf der vorbestimmten Zeit Verschieben des Sondenkopfs in das Hüllrohr, so dass sich der Sondenkopf innerhalb des Hüllrohrs befindet,
- Entnahme des Sondenkopfs aus dem Hüllrohr.

Mittels eines solchen Verfahrens kann in einfacher Weise für eine vordefinierte Zeit ein Test in Heißgas durchgeführt werden, wobei ein Sondenkopf außerhalb des definierten Testzeitraums, welcher insbesondere der vorbestimmten Zeit entsprechen kann, geschützt innerhalb des Hüllrohrs gelagert werden kann und somit dem Heißgas nicht oder zumindest nur verringert ausgesetzt ist und während der vorbestimmten Zeit in definierter Weise von Heißgas umgeben ist. Somit kann sowohl für kurze Zeiträume von beispielsweise wenigen Sekunden wie auch für längere Zeiträume von beispielsweise mehreren Minuten, Stunden oder Tagen eine Veränderung eines Materials oder eine Prozesseinwirkung auf ein Material ermittelt werden, wobei aufgrund der spezifischen Verfahrensführung und des Schutzes des Sondenkopfs im Hüllrohr die einwirkende Zeit genau bekannt ist. Zeiträume, in welchen beispielsweise die Diagnosevorrichtung an sich in einer Öffnung befestigt wird oder vorbereitende Arbeiten durchgeführt werden, zählen nicht zu einem gewünschten Testzeitraum, da der Sondenkopf durch das Hüllrohr vom Heißgas gezielt abgeschirmt werden kann. Unabhängig von der Dauer vorbereitender Arbeiten kann somit ein Test definiert für die vorbestimmte Zeit durchgeführt werden. Dies können beispielsweise auch nur wenige Sekunden sein. Dies ist mit aus dem Stand der Technik bekannten Lösungen nicht möglich.

Der Schritt der Entnahme des Sondenkopfs aus dem Hüllrohr kann insbesondere bedeuten, dass der Sondenkopf nach außerhalb des heißgasführenden Systems verbracht wird. Er kann auch weggelassen werden, wenn der Sondenkopf nochmal in das Heißgas eingeführt werden soll.

Die Erfindung betrifft des Weiteren ein Verfahren zum Durchführen einer Diagnose oder eines Tests in Heißgas, welches folgende Schritte aufweist:
- Bereitstellen eines Sondenkopfs,
- Einbringen des Sondenkopfs in ein Hüllrohr, welches in das Heißgas hineinragt,
- Verschieben des Sondenkopfs aus dem Hüllrohr heraus, so dass der Sondenkopf sich zum Durchführen der Diagnose außerhalb des Hüllrohrs im Heißgas befindet,
- wobei während der Diagnose ansprechend darauf, dass eine Reinigungsvorrichtung oder mehrere Reinigungsvorrichtungen aktiviert werden, der Sondenkopf in das Hüllrohr verschoben wird, so dass er vom Hüllrohr umgeben ist, und erst dann wieder aus dem Hüllrohr heraus in das Heißgas verschoben wird, wenn die Reinigungsvorrichtung deaktiviert wurde oder die Reinigungsvorrichtungen deaktiviert wurden.

Mittels eines solchen Verfahrens kann der Sondenkopf wirkungsvoll geschützt werden, während Reinigungsmaßnahmen durchgeführt werden. Beispielsweise kann es sich um einen Sondenkopf wie hierin beschrieben handeln. Es kann sich beispielsweise um einen Sondenkopf handeln, mittels welchem ein Werkstoff oder ein Material getestet wird. Es kann sich alternativ oder zusätzlich um einen Sondenkopf handeln, welcher eine Beobachtungseinheit aufweist. Der Sondenkopf kann beispielsweise für eine Zeitraum von mehreren Wochen, beispielsweise einen Monat, im Heißgas verbleiben. Reinigungsvorrichtungen können beispielsweise als Schraublanzenbläser, Wasserlanzenbläser oder in Form von Sprengladungen ausgeführt sein. Sie können typischerweise eine Kesselwand oder eine andere Einrichtung reinigen, erzeugen dabei jedoch typischerweise umherfliegende Partikel. Sie können beispielsweise regelmäßig einmal pro Woche aktiviert werden. Durch das Zurückziehen des Sondenkopfs in das Hüllrohr kann der Sondenkopf vor Partikeln, welche beim Reinigen erzeugt werden, geschützt werden. Relevante Reinigungsvorrichtungen können beispielsweise stromaufwärts des Hüllrohrs in einem Heißgasstrom bzw. Rauchgasstrom angeordnet sein.

Das Hüllrohr kann insbesondere während des Verfahrens oder wenn sich der Sondenkopf im Hüllrohr befindet mit Spülluft gespült werden, welche von außerhalb durch das Hüllrohr in das Heißgas geleitet wird. Dadurch kann eine besonders effektive Abschirmung des sich im Hüllrohr befindenden Sondenkopfs gegen das Heißgas erreicht werden, da ein Eindringen von Heißgas in das Hüllrohr durch die Spülluft verhindert oder zumindest deutlich verringert wird. Dadurch kann der Testzeitraum noch exakter an die vorbestimmte Zeit angeglichen werden. Mit anderen Worten kann sichergestellt werden, dass der Sondenkopf tatsächlich nur so lange mit Heißgas in Kontakt ist, wie er sich außerhalb des Hüllrohrs befindet.

Der Sondenkopf kann insbesondere einen Testabschnitt aufweisen, auf welchem das zu testende Material oder die zu testende Schicht aufgebracht ist. Der Sondenkopf kann auch als Gittersonde ausgebildet sein. Eine Gittersonde, auch als Partikelgitternetzsonde bezeichnet, kann beispielsweise der Diagnose von Stoffen wie Partikeln und gelösten Salzen im Heißgas dienen. Eine Gittersonde kann beispielsweise ein Gitter aufweisen, welches beispielsweise an einem Längsende des Sondenkopfs angeordnet sein kann und vom Heißgas umspült wird, wenn sich der Sondenkopf im Heißgas befindet. Insbesondere kann eine Gittersonde einen Sondenkörper aufweisen, welcher als langgezogenes Rohr ausgebildet sein kann. Dieser kann identisch sein mit dem Sondenkopf. Der Sondenkörper kann Einlass- und Auslassbereiche aufweisen, durch welche Gase strömen können. In oder an dem Sondenkörper kann mindestens ein Gitter angeordnet sein, welches so angeordnet sein kann, dass es in dem vorgesehenen Fluss der Gase durch den Sondenkörper liegt. Das Gitter kann insbesondere so angeordnet sein, dass es dem anströmenden Heißgas zugewandt ist. Die Gittersonde kann Mittel zum Heizen und/oder Kühlen und/oder Temperieren des Gitters aufweisen. Diese können beispielsweise elektrisch und/oder mittels Kanälen für temperierendes Fluid ausgebildet sein. Es können auch mehrere solche Gitter vorhanden sein. An einem Gitter können sich insbesondere Salze oder Partikel aus dem Heißgas absetzen, welche dadurch analysiert werden können. In der Gittersonde kann insbesondere ein Unterdruck erzeugt werden, so dass das anströmende Heißgas keinem Anstaudruck beim Anströmen des Gitters unterliegt. Der Unterdruck kann insbesondere über den bereits beschriebenen Kanal angelegt werden, welcher ansonsten zum Einführen von Luft oder eines anderen Gasmediums in den Sondenkopf dient.

Gemäß einer Weiterbildung kann ansprechend darauf, dass eine Reinigungsvorrichtung aktiviert wird oder mehrere Reinigungsvorrichtungen aktiviert werden, der Sondenkopf in das Hüllrohr verschoben werden, so dass er vom Hüllrohr umgeben ist, und erst dann wieder aus dem Hüllrohr heraus in das Heißgas verschoben werden, wenn die Reinigungsvorrichtung deaktiviert wurde oder die Reinigungsvorrichtungen deaktiviert wurden. Dies erlaubt einen Schutz des Sondenkopfs während einer Reinigung, die zu umherfliegenden Partikeln führen kann.

Das Verfahren kann insbesondere mittels einer hierin beschriebenen Diagnosevorrichtung und/oder eines hierin beschriebenen heißgasführenden Systems durchgeführt werden. Hierzu kann auf alle hierin beschriebenen Ausführungen und Varianten zurückgegriffen werden. Insbesondere für den Fall, dass wie bereits beschrieben eine Spülluft verwendet werden soll, kann auf die weiter oben beschriebenen Ausführungen mit der Möglichkeit zum Einblasen von Luft oder eines anderen Gasmediums zurückgegriffen werden.

Die Erfindung betrifft des Weiteren eine Verwendung einer Diagnosevorrichtung wie hierin beschrieben oder eines heißgasführenden Systems wie hierin beschrieben zum Testen eines Materials oder einer Schicht in Heißgas und/oder zur visuellen Beobachtung eines heißgasführenden Systems von innen. Auch zum Untersuchen von Korrosionsangriffen, von Korrosionsmilieus, von Korrosionsursachen, von Belageigenschaften wie Gefüge, Aufbau oder Zusammensetzung eines Belags, oder von Abzehrraten kann die Diagnosevorrichtung beispielsweise verwendet werden. Hierbei kann auf alle hierin beschriebenen Ausführungen bezüglich der Diagnosevorrichtung oder des heißgasführenden Systems zurückgegriffen werden.

Weitere Merkmale und Vorteile wird der Fachmann den nachfolgend mit Bezug auf die beigefügte Zeichnung beschriebenen Ausführungsbeispielen entnehmen. Dabei zeigen:
- Fig. 1:: einen Sondenkopf gemäß einem ersten Ausführungsbeispiel,
- Fig. 2:: den Sondenkopf von Fig. 1 in einer ersten Schnittansicht,
- Fig. 3:: den Sondenkopf von Fig. 1 in einer zweiten Schnittansicht,
- Fig. 4:: einen Sondenkopf gemäß einem zweiten Ausführungsbeispiel,
- Fig. 5:: den Sondenkopf von Fig. 4 in einer ersten Schnittansicht,
- Fig. 6:: den Sondenkopf von Fig. 4 in einer zweiten Schnittansicht,
- Fig. 7:: einen Sondenkopf gemäß einem dritten Ausführungsbeispiel,
- Fig. 8:: den Sondenkopf von Fig. 7 in einer ersten Schnittansicht,
- Fig. 9:: den Sondenkopf von Fig. 7 in einer zweiten Schnittansicht,
- Fig. 10:: einen Sondenkopf gemäß einem vierten Ausführungsbeispiel,
- Fig. 11:: den Sondenkopf von Fig. 10 in einer Schnittansicht,
- Fig. 12:: den Sondenkopf von Fig. 11 in einem anderen Zustand,
- Fig. 13:: einen Sondenkopf gemäß einem fünften Ausführungsbeispiel,
- Fig. 14:: den Sondenkopf von Fig. 13 in einer ersten Schnittansicht,
- Fig. 15:: den Sondenkopf von Fig. 13 in einer zweiten Schnittansicht,
- Fig. 16:: eine Sondenanordnung gemäß einem ersten Ausführungsbeispiel,
- Fig. 17:: die Sondenanordnung von Fig. 16 in größerer Detailliertheit,
- Fig. 18:: eine Sondenanordnung gemäß einem zweiten Ausführungsbeispiel,
- Fig. 19:: eine Diagnosevorrichtung gemäß einem ersten Ausführungsbeispiel,
- Fig. 20:: einen Ausschnitt aus der Diagnosevorrichtung von Fig. 19,
- Fig. 21:: einen weiteren Ausschnitt aus der Diagnosevorrichtung von Fig. 19,
- Fig. 22:: eine Diagnosevorrichtung gemäß einem zweiten Ausführungsbeispiel,
- Fig. 23:: eine Schnittansicht durch die Diagnosevorrichtung von Fig. 22,
- Fig. 24:: eine weitere Schnittansicht durch die Diagnosevorrichtung von Fig. 22,
- Fig. 25:: eine Diagnosevorrichtung gemäß einem dritten Ausführungsbeispiel,
- Fig. 26:: die Diagnosevorrichtung von Fig. 25 in einer anderen Ansicht,
- Fig. 27:: Komponenten der Diagnosevorrichtung von Fig. 25,
- Fig. 28:: eine Sondenanordnung gemäß einem dritten Ausführungsbeispiel,
- Fig. 29:: die Sondenanordnung von Fig. 28 in einer anderen Ansicht,
- Fig. 30:: eine Sondenanordnung gemäß einem vierten Ausführungsbeispiel,
- Fig. 31:: die Sondenanordnung von Fig. 30 in einer anderen Ansicht,
- Fig. 32:: eine Diagnosevorrichtung gemäß einem vierten Ausführungsbeispiel,
- Fig. 33:: ein heißgasführendes System,
- Fig. 34:: einen Sondenkopf gemäß einem sechsten Ausführungsbeispiel,
- Fig. 35:: eine Sondenanordnung gemäß einem fünften Ausführungsbeispiel,
- Fig. 36:: die Sondenanordnung von Fig. 35 in einem anderen Zustand,
- Fig. 37:: einen Sondenkopf gemäß einem siebten Ausführungsbeispiel, und
- Fig. 38:: einen Sondenkopf gemäß einem achten Ausführungsbeispiel.

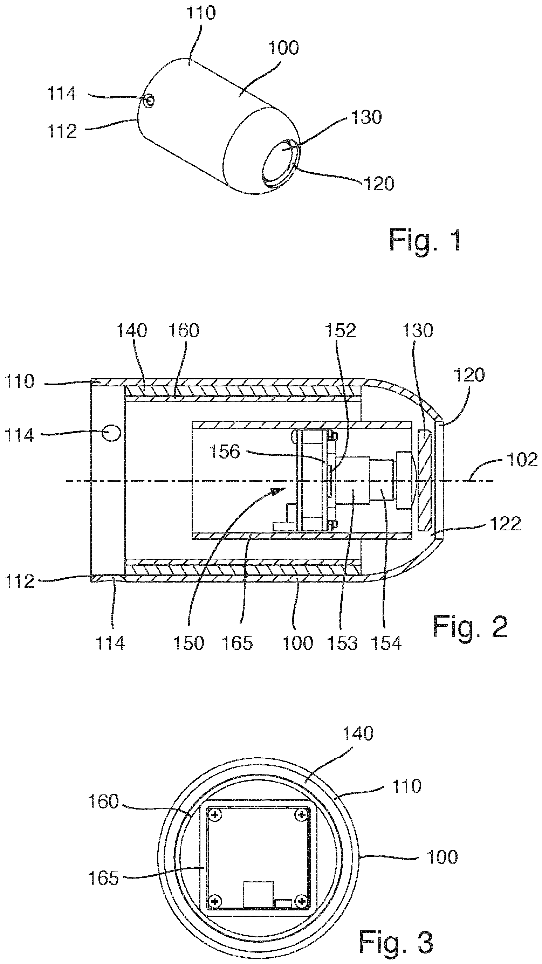

Fig. 1 zeigt einen Sondenkopf 100 gemäß einem ersten Ausführungsbeispiel. Der Sondenkopf 100 weist eine Außenhülle 110 auf, welche vorliegend aus Edelstahl ausgebildet ist und den Sondenkopf 100 außenseitig begrenzt. Die Außenhülle 110 ist vorliegend zumindest im Wesentlichen radialsymmetrisch ausgebildet und grenzt den Sondenkopf 100 nach außen hin ab. Die Außenhülle 110 ist heißgas- und hochtemperaturbeständig ausgebildet, so dass der Sondenkopf 100 im Heißgas eingesetzt werden kann.

In der Außenhülle 110 ist vorne ein Sichtfenster 120 ausgebildet. An dem Sichtfenster 120 ist die Außenhülle 110 unterbrochen, so dass grundsätzlich ein Innenraum des Sondenkopfs 100 zugänglich ist. Innerhalb des Sondenkopfs 100 befindet sich unmittelbar am Sichtfenster 120 ein Schutzelement 130, welches das Sichtfenster 120 zum größten Teil abdeckt. Auf die Funktionalität wird weiter unten näher eingegangen werden.

Gegenüberliegend ist an der Außenhülle 110 ein Flansch 112 ausgebildet, mittels welchem der Sondenkopf 100 an einem Sondenträger oder einer anderen Halterung befestigt werden kann. In dem Flansch 112 sind Durchgangslöcher 114 ausgebildet, wovon in Fig. 1 ein Durchgangsloch 114 zu sehen ist. In anderen Figuren sind teilweise mehrere dieser Durchgangslöcher 114 zu sehen.

Fig. 2 zeigt den Sondenkopf von Fig. 1 in einer ersten Schnittansicht. Dabei handelt es sich um eine Schnittansicht entlang der Längsrichtung des Sondenkopfs 100. Dementsprechend ist eine Längsachse 102 des Sondenkopfs 100 eingezeichnet.

Unmittelbar innerhalb der Außenhülle 110 ist eine außenseitige Isolierschicht 140 angeordnet, welche aus thermisch isolierendem Material wie beispielsweise Mineralfaser ausgebildet ist. Diese erstreckt sich innerhalb des Sondenkopfs 100 entlang seines Umfangs. Unmittelbar innerhalb der außenseitigen Isolierschicht 140 ist eine Einsteckhülse 160 angeordnet, welche unmittelbar an die außenseitige Isolierschicht 140 angrenzt. Dadurch wird die Stabilität innerhalb des Sondenkopfs 100 erhöht.

Innerhalb der Einsteckhülse 160 befindet sich ein Trägerelement 165. Wie in Fig. 3 zu sehen ist, hat das Trägerelement 165 einen vorliegend quadratischen Außenquerschnitt und passt sich damit in die Einsteckhülse 160 ein.

Innerhalb des Trägerelements 165 ist eine Beobachtungseinheit 150 angeordnet. Die Beobachtungseinheit 150 dient dazu, Elemente außerhalb des Sondenkopfs 100 aufzunehmen und entsprechende Bilder oder Videos zu erzeugen. Hierzu weist die Beobachtungseinheit 150 eine Kamera 152 auf. Des Weiteren weist die Beobachtungseinheit 150 einen Objektivhalter 153 auf, welcher unmittelbar an die Kamera 152 angrenzt. Der Objektivhalter 153 hat ein Gewinde, in welches ein wechselbares Objektiv 154 eingeschraubt ist. Die Kamera 152 ist vorliegend eine elektronische Kamera mit hoher Auflösung, beispielsweise wie weiter oben beschrieben. Die Beobachtungseinheit 150 weist zum Halten der Kamera 152 eine Platine 156 auf, auf welcher die Kamera 152 aufgebracht ist. Die Platine 156 ist in dem Trägerelement 165 aufgenommen und relativ zu diesem befestigt, so dass eine Blickrichtung der Kamera 152 definiert wird.

Wie gezeigt blickt die Kamera 152 durch das Objektiv 154 und anschließend durch das Schutzelement 130 und das Sichtfenster 120. Trotz der grundsätzlich festen Ausgestaltung des Sondenkopfs 100 kann die Kamera 152 somit Elemente außerhalb des Sondenkopfs 100 sehen und beobachten.

Alle erwähnten Komponenten sind bei der gezeigten Ausführung grundsätzlich voneinander unabhängig in dem Sondenkopf 100 angebracht. Dies bedeutet insbesondere, dass die außenseitige Isolierschicht 140, die Einsteckhülse 160, das Trägerelement 165 und die Beobachtungseinheit 150 separat voneinander aus dem Sondenkopf 100 entnommen werden können und somit auch austauschbar sind. Fällt beispielsweise eine der genannten Komponenten aus oder ist sie aufgrund eines Einsatzes zu beschädigt, kann somit ein separater Austausch erfolgen, wobei die anderen Komponenten wiederverwertet werden können. Auch eine gemeinsame Entnahme ist jedoch möglich. Auch die Beobachtungseinheit 150 ist grundsätzlich zerlegbar, so dass die einzelnen Komponenten ausgetauscht werden können, wobei beispielsweise das Objektiv 154 ausgetauscht werden kann.

Zwischen Sichtfenster 120 und Schutzelement 130 ist ein Luftaustrittsspalt 122 ausgebildet, welcher dafür sorgt, dass in den Sondenkopf 100 eingeblasene Luft oder ein anderes Gasmedium aus dem Sondenkopf 100 entweichen kann. Somit kann der Sondenkopf 100 beispielsweise gekühlt werden, indem Luft in den Sondenkopf 100 eingeblasen wird, und diese Luft kann durch den Luftaustrittsspalt 122 entweichen. Sie entweicht dabei typischerweise in das umgebende Heißgas. Zusätzlich zu einer Kühlwirkung kann damit auch einer Verschmutzung des Schutzelements 130 vorgebeugt werden, da Partikel davon abgehalten werden, sich dem Schutzelement 130 überhaupt zu nähern. Auch bereits auf dem Schutzelement 130 abgelagerte Partikel können durch die ausströmende Luft entfernt werden.

Fig. 3 zeigt den Sondenkopf von Fig. 1 in einer zweiten Schnittansicht, nämlich einer Querschnittsansicht. Dabei ist zu sehen, dass das Trägerelement 165 einen quadratischen Außenquerschnitt hat und mit seinen Ecken an der Einsteckhülse 160 anliegt. Dies ermöglicht ein Halten und eine Positionierung des Trägerelements 165 durch Einpressen in der Einsteckhülse 160.

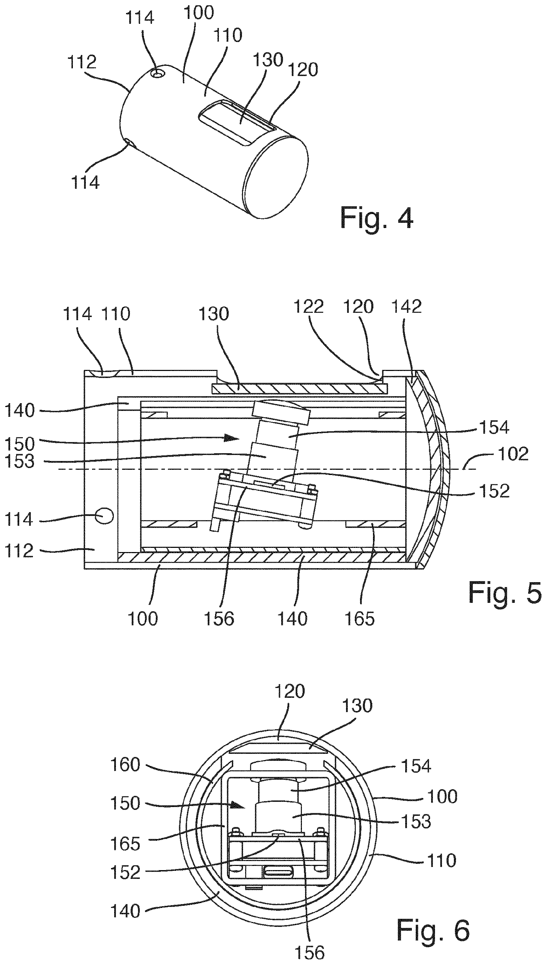

Fig. 4 zeigt einen Sondenkopf 100 gemäß einem zweiten Ausführungsbeispiel. In Abweichung zum ersten Ausführungsbeispiel ist dabei das Sichtfenster 120 seitlich am Sondenkopf 100 ausgebildet, so dass eine Blickrichtung zur Seite hin möglich ist.

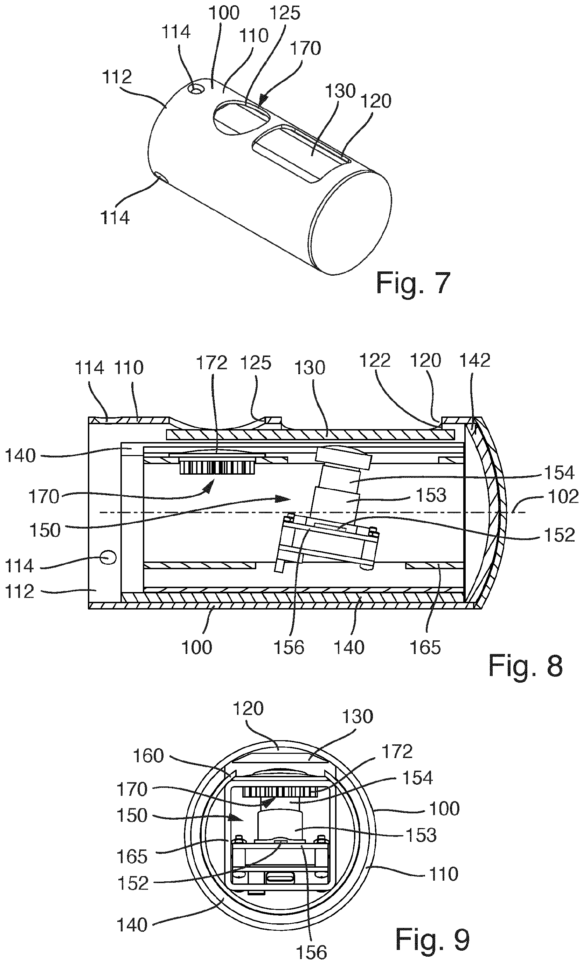

Die Fig. 5 und 6 zeigen Schnittansichten des Sondenkopfs 100 von Fig. 4 entsprechend der Schnittansichten der Fig. 2 und 3 mit Bezug auf den Sondenkopf 100 der Fig. 1. Gleiches gilt im Übrigen für die weiter unten beschriebenen Schnittansichten der Fig. 8 und 9 mit Bezug auf den Sondenkopf 100 von Fig. 7.

Nachfolgend werden im Wesentlichen die jeweiligen Unterschiede der Ausführungsbeispiele beschrieben.

Wie in Fig. 5 zu sehen ist, zeigt die Kamera 152 beim Sondenkopf 100 gemäß dem zweiten Ausführungsbeispiel nicht nach vorne, sondern zur Seite, also in der Schnittansicht von Fig. 5 nach oben. Dabei ist sie zur Vertikalen um etwa 10° verkippt, so dass sich insgesamt ein Blickwinkel von 80° relativ zu einer Längsachse 102 des Sondenkopfs 100 einstellt. An einer Vorderseite des Sondenkopfs 100, an welcher beim ersten Ausführungsbeispiel das Sichtfenster 120 ausgebildet ist, befindet sich beim zweiten Ausführungsbeispiel eine vordere Isolierschicht 142. Damit kann die Wärmeisolierung an dieser Stelle verbessert werden.

Fig. 7 zeigt einen Sondenkopf 100 gemäß einem dritten Ausführungsbeispiel. In Abwandlung zum zweiten Ausführungsbeispiel ist dabei zusätzlich zur Beobachtungseinheit 150 eine Beleuchtungsvorrichtung 170 in dem Sondenkopf 100 ausgebildet. Diese dient zur Beleuchtung einer Umgebung des Sondenkopfs 100. Damit die Beleuchtungsvorrichtung 170 Licht nach außerhalb des Sondenkopfs 100 abstrahlen kann, ist ein weiteres Sichtfenster 125 ausgebildet, wobei das Schutzelement 130 vorliegend so lang ist, dass es auch das weitere Sichtfenster 125 abdeckt. Alternativ könnten beispielsweise auch zwei separate Schutzelemente verwendet werden, wobei eines das Sichtfenster 120 und ein weiteres das weitere Sichtfenster 125 abdecken kann.

Wie in Fig. 8 zu sehen ist, weist die Beleuchtungsvorrichtung 170 eine Lampe 172 auf, welche vorliegend als Leuchtdiode ausgebildet ist. Auch andere Ausführungen sind hier jedoch möglich. Die entsprechende Ausführung ist im Übrigen auch in Fig. 9 zu sehen. Die Lampe 172 ist unmittelbar benachbart zum Schutzelement 130 ausgebildet, so dass die Lampe 172 durch das Schutzelement 130 nach außen abstrahlen kann. Dies ermöglicht eine gezielte Beleuchtung eines von der Kamera 152 aufgenommenen Bereichs benachbart zum Sondenkopf 100, so dass dieser Bereich aktiv beleuchtet werden kann. Damit können die Aufnahmequalität und der Informationsgehalt deutlich verbessert werden.

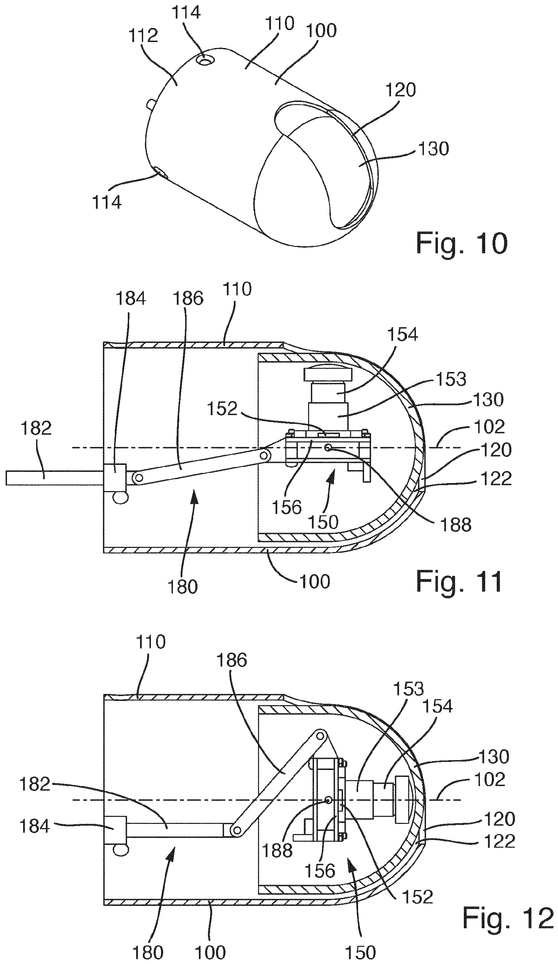

Fig. 10 zeigt einen Sondenkopf 100 gemäß einem vierten Ausführungsbeispiel. Dabei ist das Sichtfenster 120 anders ausgeführt, nämlich mit einer Langlochform entlang der Oberfläche des Sondenkopfs 100. Dies ermöglicht es, dass die Kamera 152 in unterschiedlichen Blickrichtungen verwendet wird.

Wie in der Schnittansicht von Fig. 11 zu sehen ist, weist der Sondenkopf 100 eine Verstelleinrichtung 180 auf. Diese Verstelleinrichtung 180 ist dazu ausgebildet, eine Blickrichtung der Kamera 152 zu verändern. Hierfür ist die Platine 156 vorliegend um eine Drehachse 188 drehbar gelagert.

Die Verstelleinrichtung 180 weist eine erste Stange 182 auf, welche in einer Buchse 184 geführt ist. Sie weist ferner eine zweite Stange 186 auf, welche gelenkig mit der ersten Stange 182 verbunden ist und an der Platine 156 angelenkt ist. Wie gezeigt kann somit durch Bewegen der ersten Stange 182 die Kamera 152 entlang eines Winkels von 90° um die Drehachse 188 verschwenkt werden.

Fig. 11 zeigt dabei einen Zustand, in welchem die Kamera 152 zur Seite blickt, in der Darstellung von Fig. 11 die Blickrichtung also nach oben zeigt. Fig. 12 zeigt demgegenüber einen Zustand, in welchem die Kamera 152 so verschwenkt wurde, dass die Blickrichtung nach vorne zeigt. Dadurch können unterschiedliche Blickrichtungen mit dem gleichen Sondenkopf 100 realisiert werden, und es ist sogar möglich, während des Betriebs, d.h. während sich der Sondenkopf 100 in einem heißgasführenden System wie beispielsweise einem Kessel befindet, die Blickrichtung der Kamera 152 zu verstellen. Das Sichtfenster 120 und das Schutzelement 130 sind dabei entsprechend angepasst, so dass die Kamera 152 unabhängig von der gerade gewählten Blickrichtung entsprechend ihres Sichtbereichs beobachten kann.

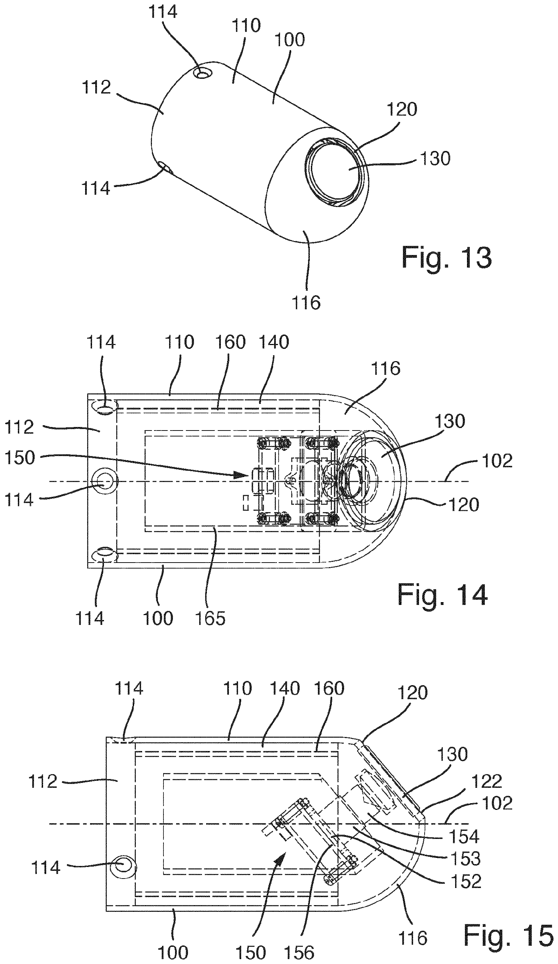

In den Fig. 13 bis 15 ist ein Sondenkopf 100 gemäß einem fünften Ausführungsbeispiel dargestellt. Im Gegensatz zum ersten Ausführungsbeispiel weist die Blickrichtung dabei mit einem Winkel von 45° zur Längsachse 102 zur Seite des Sondenkopfs 100. Das Sichtfenster 120 ist dementsprechend in einem halbkugelförmigen Bereich 116 ausgebildet. Ansonsten sei auf die obige Beschreibung verwiesen.

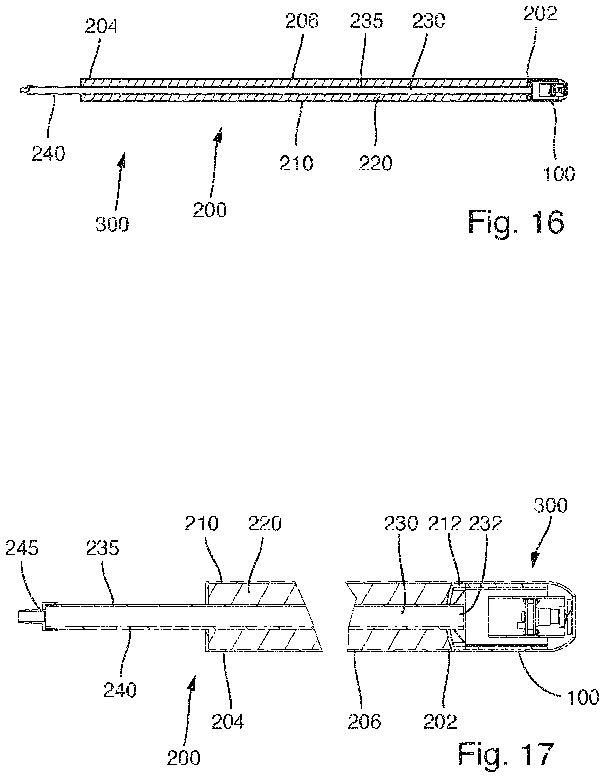

Fig. 16 zeigt eine Sondenanordnung 300 gemäß einem ersten Ausführungsbeispiel. Dabei ist ein Sondenkopf 100 entsprechend dem ersten Ausführungsbeispiel als Bestandteil der Sondenanordnung 300 dargestellt, wobei auf diesen nun nicht mehr separat eingegangen wird. Vielmehr sei auf die obige Beschreibung verwiesen.

Zusätzlich zum Sondenkopf 100 weist die Sondenanordnung 300 einen Sondenträger 200 auf. Der Sondenträger 200 erstreckt sich entlang einer geraden Längsrichtung und ist entlang dieser in einen Flansch 202, einen Lagerungsabschnitt 204 und einen Abstandsabschnitt 206 unterteilt. Mit dem Flansch 202 wird eine Verbindung zum Sondenkopf 100 hergestellt. Dies kann insbesondere bedeuten, dass der Sondenkopf 100 am Flansch 202 des Sondenträgers 200 befestigt wird. Hierfür kann der Flansch 112 des Sondenkopfs 100 verwendet werden. Der Lagerungsabschnitt 204 dient der Befestigung des Sondenträgers 200 an einer Kesselwand oder einem anderen Bauelement oder der Lagerung in einem weiter unten erwähnten Hüllrohr, so dass der Sondenträger 200 in einem heißgasführenden System positioniert werden kann. Der Abstandsabschnitt 206 sorgt für einen Abstand zwischen Flansch 202 und Lagerungsabschnitt 204, so dass bewusst ein Abstand hergestellt werden kann.

Der Sondenträger 200 weist eine Hülle 210 auf, welche den Sondenträger 200 nach außen begrenzt. Die Hülle 210 ist heißgas- und hochtemperaturbeständig ausgelegt, so dass der Sondenträger 200 in einer Heißgasatmosphäre mit typischerweise korrosiven Gasen und hohen Temperaturen verwendet werden kann. Unmittelbar innerhalb der Hülle 210 befindet sich eine Isolationsschicht 220, welche vorliegend aus thermisch isolierenden Mineralfasern ausgebildet ist. Noch weiter innen befindet sich ein Kanal 230, welcher entlang der Längsrichtung des Sondenträgers 200 durchgeht. Der Kanal 230 wird radial außenseitig von einer Kanalwand 235 begrenzt, welche zwischen dem Kanal 230 und der Isolationsschicht 220 angeordnet ist.

Gegenüberliegend zum Sondenkopf 100 steht ein Einlass 240 aus dem Rest des Sondenträgers 200 hervor, wobei der Einlass 240 unmittelbar in den Kanal 230 übergeht und dazu dient, Luft oder ein anderes Fluidmedium in den Kanal 230 einzublasen. Der Kanal 230 mündet dabei unmittelbar in das Innere des Sondenkopfs 100, so dass die Luft oder das Gasmedium in den Sondenkopf 100 eintreten kann. Dadurch kann der Sondenkopf 100 beispielsweise gekühlt werden.

Fig. 17 zeigt den Flansch 202 und den Lagerungsabschnitt 204 des Sondenträgers 200 in größerer Detailliertheit. Dabei ist zu sehen, dass der Einlass 240 als Vorsprung ausgebildet ist, an welchen sich eine Einlassöffnung 245 anschließt. Die Einlassöffnung 245 dient zum Einblasen von Luft oder eines anderen Gasmediums.

In Fig. 17 ist auch zu sehen, dass der Kanal 230 einen Auslass 232 aufweist, welcher in den Sondenkopf 100 mündet. Dies erlaubt wie bereits erwähnt eine Kühlung des Sondenkopfs 100. Die Luft oder das andere Gasmedium kann dann beispielsweise über den bereits erwähnten Luftaustrittsspalt 122 des Sondenkopfs 100 austreten und dabei auch eine Schutzwirkung gegen Verschmutzung des Schutzelements 130 entfalten. Des Weiteren ist in Fig. 17 auch zu sehen, dass der Flansch 202 einen Vorsprung 212 zum Aufsetzen des Sondenkopfs 100 aufweist. Dieser Vorsprung 212 dient zur Fixierung und Halterung des Sondenkopfs 100, so dass der Sondenkopf 100 zuverlässig an dem Sondenträger 200 befestigt werden kann.

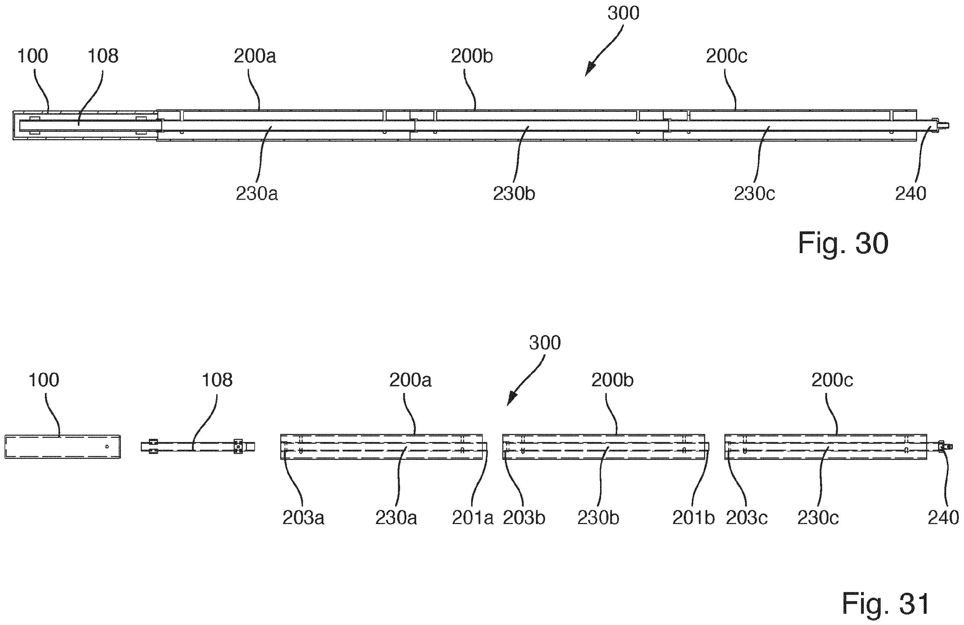

Es sei erwähnt, dass die hier beschriebene Ausführung auch kaskadiert werden kann, d.h. dass auch mehrere Sondenträger 200 hintereinander verwendet werden können, so dass ein noch größerer Abstand des Sondenkopfs 100 von einer Kesselwand erreicht werden kann. Hierauf wird weiter unten mit Bezug auf die Figuren 30 und 31 näher eingegangen werden.

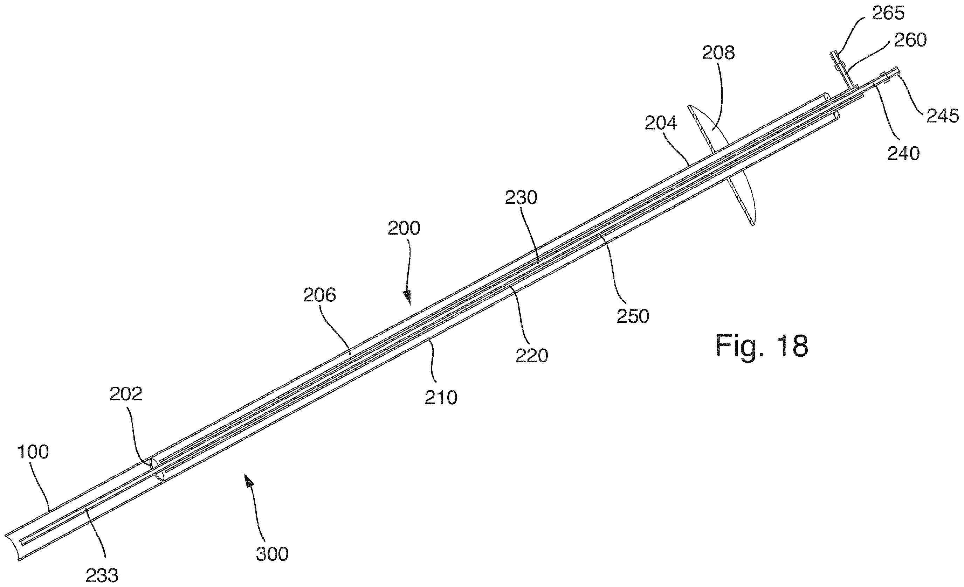

Fig. 18 zeigt eine Sondenanordnung 300 gemäß einem zweiten Ausführungsbeispiel. Die Sondenanordnung 300 weist dabei einen alternativen Sondenträger 200 auf, auf welchem ein Sondenkopf 100 aufgebracht ist. Bei dem Sondenträger 200 gemäß der Ausführung von Fig. 18 ist außenseitig zum Kanal 230 ein weiterer Kanal 250 angeordnet. Dieser ist mit einem Auslass 260 verbunden, welcher wiederum einen Auslassanschluss 265 aufweist. Dies erlaubt eine Führung von Luft oder eines anderen Gasmediums durch die beiden Kanäle 230, 250, wobei die Luft oder das andere Gasmedium durch den Sondenträger 200 sowohl ein- wie auch ausgeblasen werden kann. Beispielsweise kann Luft oder das andere Gasmedium durch den Kanal 230 in den Sondenkopf 100 eingeblasen werden, kann dort eine gewünschte Kühlwirkung entfalten und kann dann ganz oder teilweise durch den weiteren Kanal 250 wieder nach außen geleitet werden. Durch den Auslass 260 kann die Luft oder das andere Gasmedium wieder nach außen gelangen.

Am Lagerungsabschnitt 204 ist vorliegend eine Abdichtscheibe 208 angebracht, mittels welcher der Sondenträger 200 befestigt werden kann. Beispielsweise kann er in einer Öffnung einer Kesselwand befestigt werden.

Der Sondenkopf 100 der Ausführung von Fig. 18 weist keine Beobachtungseinheit 150 auf. Vielmehr ist er rohrförmig ausgeführt und enthält keine elektronischen Komponenten. Auf seiner Außenoberfläche kann eine Schutzschicht, ein Werkstoff oder ein Material aufgebracht werden, um dies im Heißgas zu testen oder eine Diagnose damit durchzuführen. Innerhalb des Sondenkopfs 100 befindet sich ein Auslassrohr 233 als Verlängerung des Kanals 230, so dass die durch den Kanal 230 in den Sondenkopf 100 einströmende Luft oder ein anderes Gasmedium erst kurz vor dem Ende des Sondenkopfs 100 in den Sondenkopf 100 ausströmt. Dies führt dazu, dass der Sondenkopf 100 an seinem dem Sondenträger 200 gegenüberliegenden Ende am stärksten gekühlt wird. Damit wird ein Temperaturgradient über den Sondenkopf 100 erreicht, was einen Test bei unterschiedlichen Temperaturen in nur einem Arbeitsgang ermöglicht.

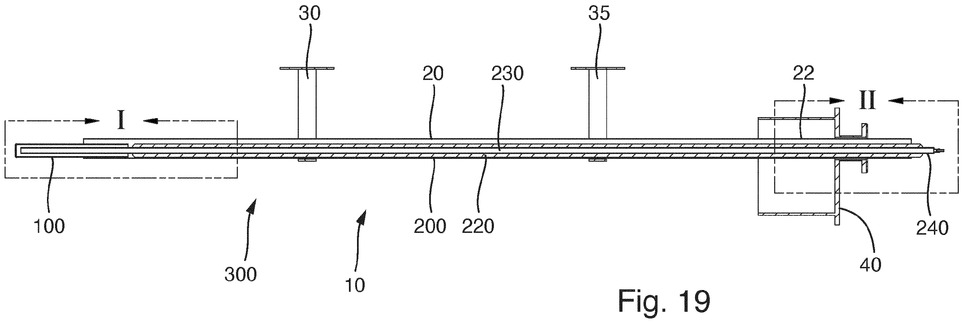

Fig. 19 zeigt eine Diagnosevorrichtung 10 gemäß einem ersten Ausführungsbeispiel. Die Diagnosevorrichtung 10 weist eine Sondenanordnung 300 mit einem Sondenträger 200 und einem Sondenkopf 100 auf. Bezüglich des Sondenträgers 200 und des Sondenkopfs 100 sei auf die andernorts hierin gegebene Beschreibung verwiesen.

Die Diagnosevorrichtung 10 weist ein Hüllrohr 20 auf. Dieses Hüllrohr 20 umgibt den Sondenträger 200, mit Ausnahme des nach rechts vorstehenden Teils, und einen Teil des Sondenkopfs 100. Das Hüllrohr 20 ist als langgestrecktes, gerades Rohr ausgebildet und nimmt wie bereits erwähnt den größten Teil des Sondenträgers 200 sowie einen Teil des Sondenkopfs 100 auf. Dies gilt für den dargestellten Zustand, wobei Sondenträger 200 und Sondenkopf 100 im Hüllrohr 20 längsverschiebbar gelagert sind, so dass beispielsweise durch Aufbringen einer Kraft am rechten Rand des Sondenträgers 200, welche in eine der beiden Richtungen entlang seiner Längsrichtung wirkt, der Sondenkopf 100 weiter aus dem Hüllrohr 20 herausgefahren werden kann oder auch vollständig in das Hüllrohr 20 hineingezogen werden kann.

Das Hüllrohr 20 weist einen Befestigungsbereich 22 auf, welcher dazu ausgebildet ist, an einer Kesselwand oder an einer anderen Einheit eines heißgasführenden Systems befestigt zu werden. Hierzu ist ein Adapterelement 40 vorgesehen, welches unmittelbar an einer typischen Öffnung einer Kesselwand befestigt werden kann. Das Adapterelement 40 dichtet somit die Öffnung ab, wobei wie gezeigt ein Durchlass in dem Adapterelement 40 zum Durchführen des Hüllrohrs 20 ausgebildet ist.

Das Hüllrohr 20 ist ferner mittels einer ersten Aufhängung 30 und einer zweiten Aufhängung 35 in dem heißgasführenden System befestigt. Beispielsweise kann die Befestigung an einer nicht dargestellten Decke erfolgen.

Der Sondenträger 200 erfüllt vorliegend die Aufgabe einer Halterung für den Sondenkopf 100. Sowohl der Sondenträger 200 wie auch der Sondenkopf 100 sind wie bereits erwähnt entlang der gemeinsamen Längsrichtung von Sondenkopf 100, Sondenträger 200 und Hüllrohr 20 verschiebbar.

Abgesehen davon, dass durch den Kanal 230 des Sondenträgers 200 Luft oder ein anderes Gasmedium in den Sondenkopf 100 geblasen werden kann, um diesen zu kühlen oder Reinigungsfunktionen auszuführen, kann auch seitlich zum Sondenträger 200 in das Hüllrohr 20 Luft oder ein anderes Gasmedium eingeblasen werden. Dies geschieht von der rechten Seite aus, wobei dies beispielsweise durch einfaches Einlegen einer Luftzuführung erfolgen kann, oder es können auch komplexere Systeme wie beispielsweise Dichtungen mit speziellen Anschlüssen vorgesehen werden.

Durch die gezeigte Ausführung ist eine besondere Verfahrensführung bei der Durchführung eines Tests wie beispielsweise eines Materialtests möglich. Der Sondenkopf 100 kann hierzu mit einer zu testenden Schutzschicht, mit einem zu testenden Werkstoff und/oder mit einem zu testenden Material oder einer zu testenden Schicht versehen sein, d.h. er präsentiert dieses Material oder diese Schicht an seiner Außenoberfläche. In einem Grundzustand kann der Sondenträger 100 zunächst in dem Hüllrohr 20 angeordnet sein. Durch die eben erwähnte Zuführung von Luft oder eines anderen Gasmediums in das Hüllrohr 20 wird ganz oder zumindest weitestgehend verhindert, dass Heißgas vom linken Ende des Hüllrohrs 20 aus in dieses eindringt. Der Sondenkopf 100 ist somit wirksam gegen das Heißgas abgeschirmt. Durch Anwenden einer nach links wirkenden Kraft auf den Sondenträger 200 kann dieser relativ zum Hüllrohr 20 nach links verschoben werden, so dass der Sondenkopf 100 aus dem Hüllrohr 20 herausragt. Er befindet sich nun im Heißgas und kann für einen vorbestimmten Zeitraum dort gelassen werden. Nach Ablauf dieses vorbestimmten Zeitraums kann der Sondenkopf 100 wieder in das Hüllrohr 20 zurückgezogen werden, so dass er nicht mehr mit dem Heißgas in Kontakt kommt. Auf diese Weise kann eine sehr exakte Zeit für einen Test vorgegeben und auch eingehalten werden, wobei diese Zeit beispielsweise nur wenige Sekunden betragen kann, sie kann jedoch auch einen beliebig längeren Zeitraum betragen. Im Gegensatz zu bekannten Systemen, welche einen Sondenkopf 100 starr im Heißgas befestigen und somit umfangreiche Arbeiten erfordern, um den Sondenkopf 100 ein- und auszubauen, ist durch die gezeigte Ausführung einer Diagnosevorrichtung 10 ein zeitaufgelöster Test bzw. ein Test mit einer genau vorgegebenen Zeit auch bei sehr kleinen Zeiten möglich. Dadurch können Materialien, Werkstoffe oder Schutzschichten oder auch andere Komponenten im Heißgas getestet werden und die Wirkung kann zeitabhängig überprüft werden. Auch ist es möglich, bei vorhandenem montiertem Hüllrohr 20 den Sondenkopf 100 komplett aus dem Hüllrohr 20 nach rechts zu entfernen und ihn sofort zu analysieren. Auch kann unmittelbar danach ein anderer Sondenkopf 100 eingeschoben werden, beispielsweise mit dem gleichen Sondenträger 200 oder auch mit einem anderen Sondenträger 200.

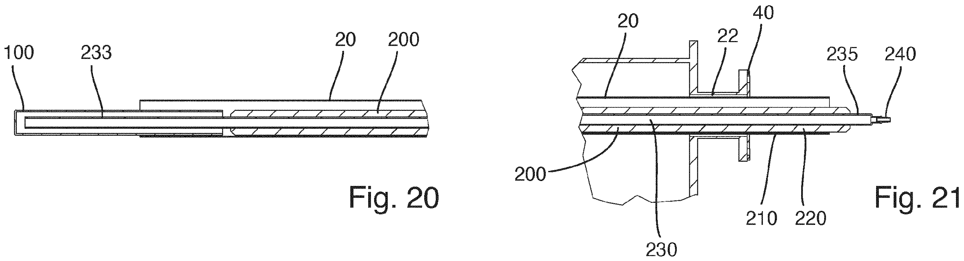

Fig. 20 zeigt einen linken, in Fig. 19 mit I markierten Bereich der Diagnosevorrichtung 10. Dabei ist zu sehen, dass der Sondenkopf 100 partiell in dem Hüllrohr 20 aufgenommen ist, partiell jedoch vorsteht. Dies kann beispielsweise ein Zustand während eines Ausfahrens oder Zurückziehens des Sondenkopfs 100 sein. Es kann damit jedoch beispielsweise auch für einen bestimmten Zeitraum ein Zustand bewusst eingenommen werden, bei welchem sich der Sondenkopf 100 nur teilweise außerhalb des Hüllrohrs 20 befindet, so dass ein Teil unter Einwirkung des Heißgases steht und ein anderer Teil nicht unter Einwirkung des Heißgases steht.

Das Auslassrohr 233 reicht wie gezeigt bis in den Sondenkopf 100 hinein, so dass austretende Luft oder ein anderes Gasmedium am linken Ende des Sondenkopfs 100 in den Sondenkopf 100 eintritt. Dadurch kann die Kühlwirkung an dieser Stelle am größten sein.

Fig. 21 zeigt einen rechten, in Fig. 19 mit II markierten Bereich der Diagnosevorrichtung 10. Dabei ist zu erkennen, dass das Hüllrohr 20 durch das Adapterelement 40 hindurchtritt und nach rechts offen ist. Der Sondenträger 200 liegt unten in dem Hüllrohr 20 und kann somit einfach linear verschoben werden. Dies sei als Lagerung an der Wand eines heißgasführenden Systems verstanden, da das Hüllrohr 20 typischerweise in der Wand befestigt ist. Alternativ wäre es beispielsweise auch möglich, den Sondenträger 200 mittels spezieller Abstützungen oder Halterungen innerhalb des Hüllrohrs 20 zu halten.

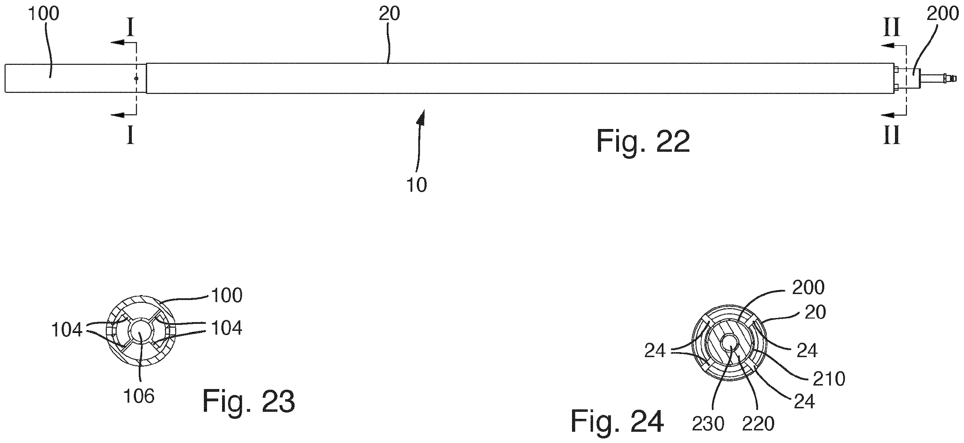

Fig. 22 zeigt eine Diagnosevorrichtung 10 gemäß einem zweiten Ausführungsbeispiel. Dabei ist ähnlich wie beim ersten Ausführungsbeispiel zu sehen, dass ein Sondenträger 200 durch ein Hüllrohr 20 hindurchgeht und ein Sondenkopf 100 links hervorsteht.

Fig. 23 zeigt einen Schnitt entlang der Schnittlinie I in Fig. 22 durch den Sondenkopf 100. Dabei ist zu sehen, dass der Sondenkopf 100 innenliegend einen Luftkanal 106 aufweist, in welchem aus dem Kanal 230 eingeblasene Luft durch den Sondenkopf 100 fließen kann. Der Luftkanal 106 ist seitlich von insgesamt vier Zentrierelementen 104 gehalten, welche sich nach außen hin abstützen. Ein Rückfluss von Luft kann beispielsweise zwischen den Zentrierelementen 104 erfolgen, oder er kann auch unterbleiben, wenn beispielsweise die Luft oder das andere Gasmedium aus dem Sondenkopf 100 austritt.

Fig. 24 zeigt einen Blick von der Schnittlinie II in Fig. 22 aus nach links, d.h. auf einen Eingangsbereich des Hüllrohrs 20. Dabei ist zu sehen, dass der Sondenträger 200 in dem Hüllrohr 20 über insgesamt vier Stützen 24 gegen das Hüllrohr 20 abgestützt ist, wobei sich die Stützen 24 radial nach außen erstrecken. Auch die Verwendung von nur drei Stützen wäre beispielsweise möglich. Der Sondenträger 200 ist dabei linear verschiebbar in den Stützen 24 gelagert, so dass die bereits beschriebene Funktionalität durchführbar ist. Bei den Stützen 24 handelt es sich bezüglich des Hüllrohrs 20 um innere Stützen.

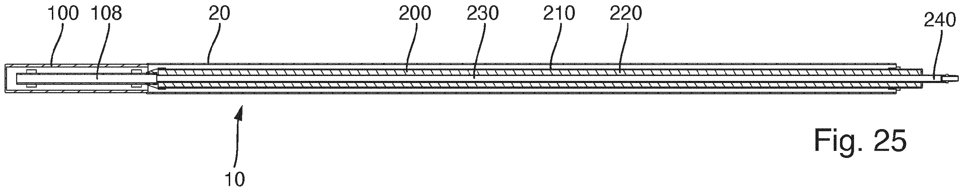

Fig. 25 zeigt eine Diagnosevorrichtung 10 gemäß einem dritten Ausführungsbeispiel. Im Unterschied zu den bisherigen Ausführungsbeispielen ist dabei der Sondenkopf 100 so groß, dass er nicht in das Hüllrohr 20 zurückgezogen werden kann. Er befindet sich somit grundsätzlich außerhalb des Hüllrohrs 20. Diese Funktionalität ist unabhängig von der nachfolgend beschriebenen Funktionalität und kann auch im Zusammenhang mit anderen Ausführungsbeispielen verwendet werden. Des Weiteren befindet sich innerhalb des Sondenkopfs 100 ein Ausblasrohr 108, welches unmittelbar am Kanal 230 des Sondenträgers 200 angeschlossen ist, jedoch im Gegensatz zum Auslassrohr 233, welches bereits weiter oben erwähnt wurde, vom Sondenträger 200 abnehmbar ist. Dieses Ausblasrohr 108 dient dazu, aus dem Kanal 230 austretende Luft oder ein anderes Gasmedium bis zum in Fig. 25 linken Ende des Sondenkopfs 100 zu transportieren und erst dort in den Sondenkopf 100 einzublasen. Dadurch kann eine besonders hohe Kühlwirkung an diesem Längsende des Sondenkopfs 100 erreicht werden. Die Luft oder das andere Gasmedium kann anschließend innerhalb des Sondenkopfs 100 und radial außerhalb zum Ausblasrohr 108 nach rechts strömen, wobei die Kühlwirkung auf den Sondenkopf 100 dabei aufgrund einer sukzessiven Erwärmung abnimmt. Der Sondenkopf 100 hat bei dieser Ausführung somit am linksseitigen Ende seine kühlste Stelle und wird nach rechts hin wärmer. Dadurch kann ein Temperaturgradient erzeugt werden, welcher für Materialtests oder sonstige Tests bei unterschiedlichen Temperaturen verwendet werden kann.

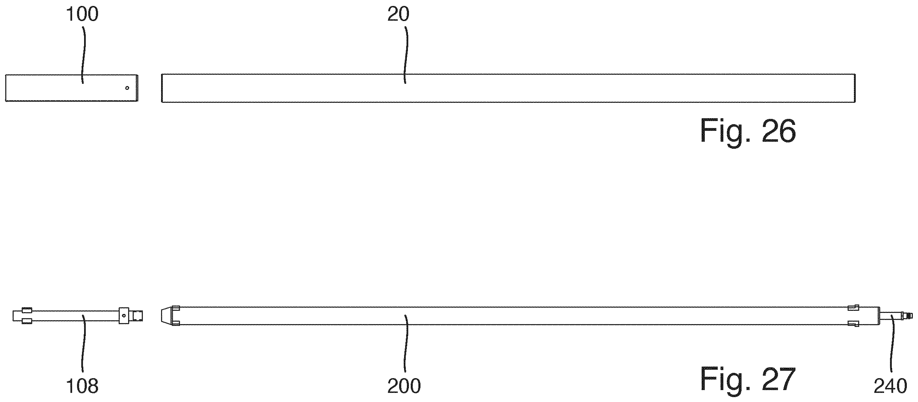

Fig. 26 zeigt das Hüllrohr 20 und den Sondenkopf 100 von Fig. 25 separat. Dabei ist zu sehen, dass diese in etwa den gleichen Durchmesser haben und somit der Sondenkopf 100 vorliegend nicht in das Hüllrohr 20 nach rechts eingezogen werden kann.

Fig. 27 zeigt den Sondenträger 200 und das Ausblasrohr 108 separat. Diese sind voneinander lösbar. Durch die lösbare Ausführung wird eine besonders hohe Modularität und Wiederverwendbarkeit einzelner Komponenten erreicht, wodurch Aufwand und Kosten insgesamt deutlich gesenkt werden können.

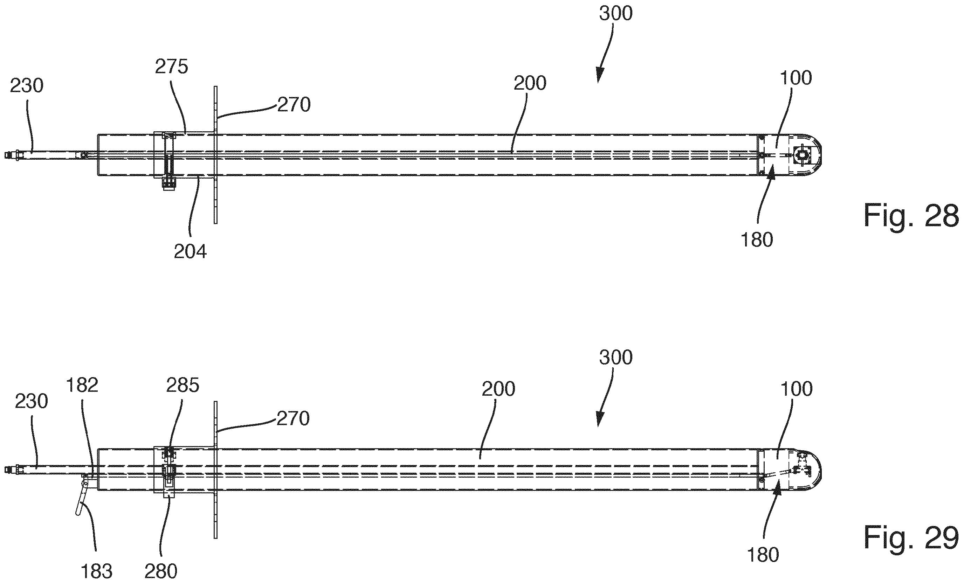

Fig. 28 zeigt eine Sondenanordnung 300 gemäß einem dritten Ausführungsbeispiel. Fig. 29 zeigt die gleiche Sondenanordnung 300 wie Fig. 28, wobei Fig. 28 vorliegend eine Draufsicht zeigt und Fig. 29 eine Seitenansicht zeigt.

Bei den Ausführungen der Fig. 28 und 29 ist der Sondenkopf 100 mit einer Verstelleinrichtung 180 versehen, wie dies bereits weiter oben ausführlich beschrieben wurde. Der Sondenträger 200 weist seitlich eine Lagerungsscheibe 270 zum Abdichten einer in einer Wand eines heißgasführenden Systems ausgebildeten, nicht dargestellten Öffnung auf. Der Sondenträger 200 bringt somit bereits Mittel zum Abdichten einer solchen Öffnung mit, was den Aufwand vor Ort deutlich verringert. Die Lagerungsscheibe 270 ist über einen Klemmverschluss 280 und Spannbügel 285 an dem Rest des Sondenträgers 200 befestigt, so dass die Lagerungsscheibe 270 abnehmbar ist und beispielsweise ausgetauscht werden kann, um sich an unterschiedliche Kesselgrößen anzupassen oder nach Verschleiß ausgetauscht zu werden. Die Lagerungsscheibe 270 ist wie gezeigt am Lagerungsabschnitt 204 angebracht.

An die Lagerungsscheibe 270 grenzt unmittelbar und damit verbunden ein rohrförmiger Bereich 275 an, welcher flächig auf dem Sondenträger 200 aufliegt und somit für eine Abdichtung gegenüber dem Sondenträger 200 sorgt. Eine Lagerungsscheibe ist grundsätzlich auch bei anderen Ausführungen einer Sondenanordnung verwendbar.

Die erste Stange 182 der Verstelleinrichtung 180 steht nach links aus dem Sondenträger 200 hervor, wobei sie wie bereits erwähnt durch einen Kanal des Sondenträgers 200 verlaufen kann. Nach unten weist von der ersten Stange 182 ein Schwenkhebel 183, welcher dazu benutzt werden kann, um die erste Stange 182 entlang ihrer Längsrichtung zu verschieben. Dadurch kann die Verstelleinrichtung 180 innerhalb des Sondenkopfs 100 von außerhalb des heißgasführenden Systems aus betätigt werden, so dass in einfacher Weise mittels rein mechanischer Komponenten eine Verstellung der Blickrichtung auch während einer laufenden Beobachtung möglich ist. Dadurch kann der Einsatzbereich des Sondenkopfs 100 zur visuellen Beobachtung deutlich erweitert werden.

Es sei erwähnt, dass das Konzept eines Sondenkopfs 100 mit Beobachtungseinheit 150 auch mit dem Konzept des Hüllrohrs 20 kombiniert werden kann. Auf alle beschriebenen Ausführungen und Varianten kann dabei jeweils zurückgegriffen werden.

Fig. 30 zeigt eine Sondenanordnung 300 gemäß einem vierten Ausführungsbeispiel. Fig. 31 zeigt diese Sondenanordnung 300 in einer zerlegten Ansicht. Dabei ist nicht nur ein Sondenträger 200 vorhanden, sondern es sind vielmehr drei Sondenträger 200a, 200b, 200c vorhanden, welche kaskadiert angeordnet sind. Jeweilige rechte Enden, welche an einen rechts davon befindlichen Sondenträger angrenzen, sind dabei mit 201a und 201b bezeichnet. Jeweilige linke Enden, welche an einen links davon befindlichen Sondenträger oder an den Sondenkopf 100 angrenzen, sind mit 203a, 203b, 203c bezeichnet. Die Kanäle 230 sind ebenfalls mit den jeweiligen Buchstaben bezeichnet. Durch eine solche Ausführung kann die Gesamtlänge erhöht werden, wodurch der Sondenkopf 100 noch weiter innerhalb eines heißgasführenden Systems positioniert werden kann, ohne dass dafür besonders lange Sondenträger verwendet werden müssen.

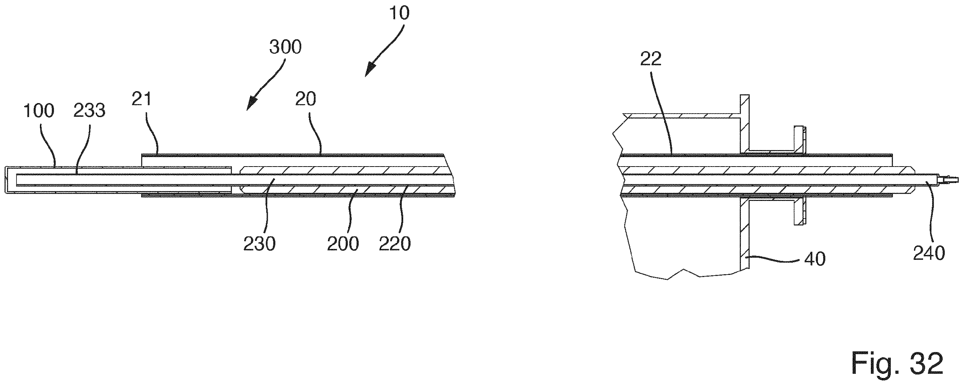

Fig. 32 zeigt eine Diagnosevorrichtung 10 gemäß einem vierten Ausführungsbeispiel. Diese ist ähnlich zu derjenigen von Fig. 19 aufgebaut. Jedoch befindet sich in Abwandlung dazu unmittelbar innerhalb des Hüllrohrs 20 eine Isolationsschicht 21, welche sich vorliegend entlang der gesamten Länge des Hüllrohrs 20 erstreckt und den innerhalb des Hüllrohrs 20 befindlichen Teil der Sondenanordnung 300 gegen übermäßige Wärmeeinwirkung abschirmt. Die Isolationsschicht 21 kann insbesondere aus Mineralfasermaterial ausgebildet sein.

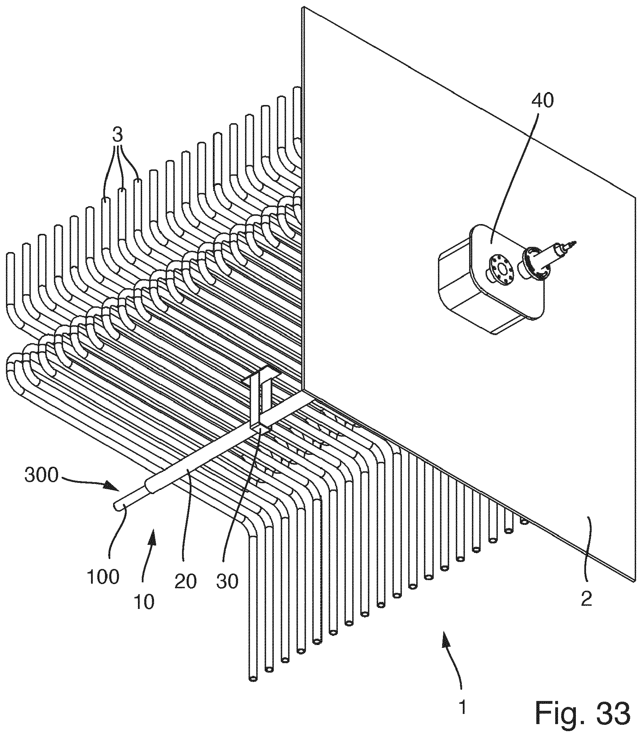

Fig. 33 zeigt ein heißgasführendes System 1. Dieses weist eine Kesselwand 2 auf, welche das heißgasführende System 1 nach außen hin begrenzt und ein Austreten von Heißgas verhindert. Es weist ferner mehrere Wärmetauscherrohre 3 auf, durch welche ein Wärmeträgermedium fließen kann und welche somit dem Heißgas Wärme entziehen können.

Innerhalb des heißgasführenden Systems 1 ist eine Diagnosevorrichtung 10 entsprechend Fig. 19 angeordnet. Die Diagnosevorrichtung 10 ist mit den Aufhängungen 30, 35 an den Wärmetauscherrohren 3 befestigt und mit dem Adapterelement 40 in der Kesselwand 2 befestigt. Dadurch wird eine hierfür in der Kesselwand 2 vorgesehene Öffnung auch abgedichtet. Von den Aufhängungen 30, 35 ist in Fig. 33 nur eine zu sehen.

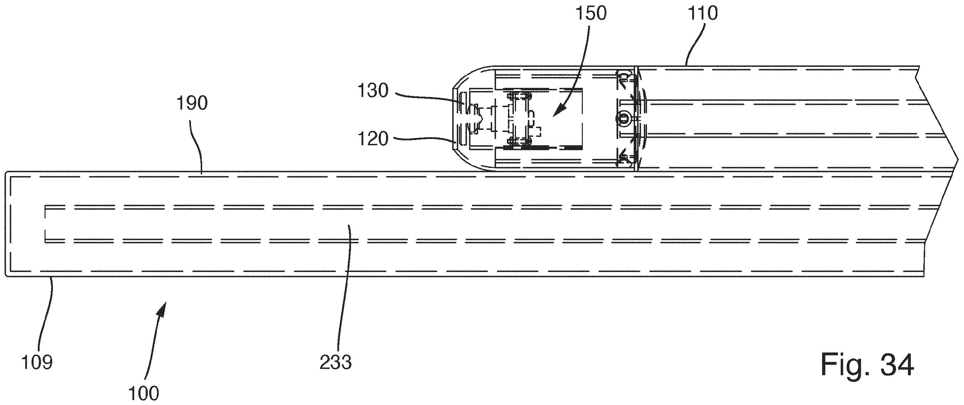

Fig. 34 zeigt einen Sondenkopf 100 gemäß einem sechsten Ausführungsbeispiel. Dabei ist an dem Sondenkopf 100 ein Vorsprung 109 ausgebildet. Auf diesem ist ein Testabschnitt 190 ausgebildet, auf welchem eine zu testende Schutzschicht, ein zu testender Werkstoff oder ein zu testendes Material aufbringbar ist. Die Wirkung von Heißgas kann dementsprechend beurteilt werden. Wie gezeigt ist vorliegend die Beobachtungseinheit 150 so angeordnet, dass der Testabschnitt 190 in ihrem Sichtfeld liegt. Somit ist eine Beobachtung einer Veränderung des Testabschnitts 190 auch während des Verbleibs des Sondenkopfs 100 im Heißgas möglich. Ein Auslassrohr 233 ragt in den Vorsprung 109 ein. Damit kann ein Temperaturgradient über den Testabschnitt 190 in bereits beschriebener Art erzeugt werden. Der Vorsprung 109 kann insbesondere abnehmbar ausgeführt sein.

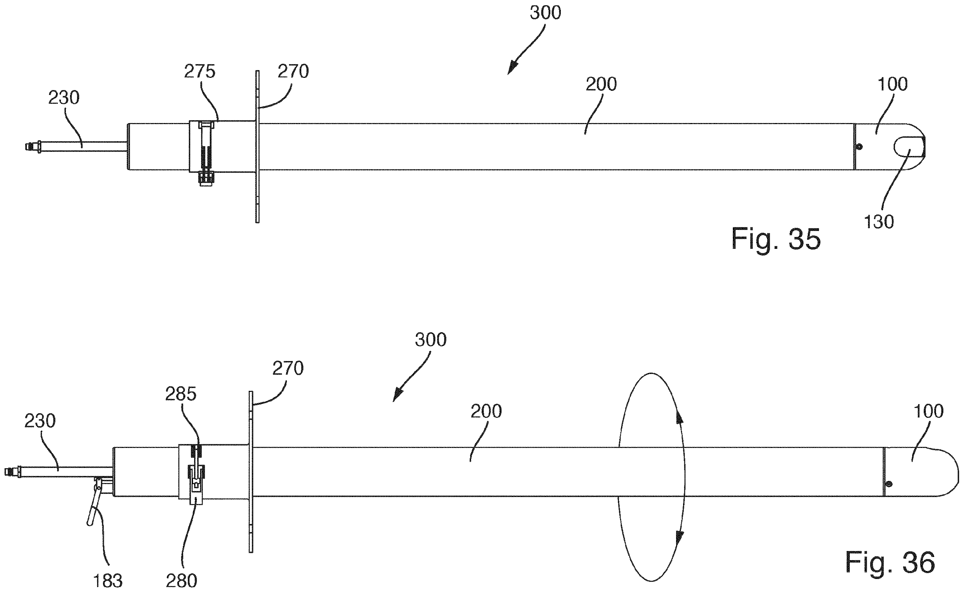

Fig. 35 zeigt eine Sondenanordnung 300 gemäß einem fünften Ausführungsbeispiel. Dieses ist im Vergleich zu demjenigen der Fig. 28 und 29 dahingehend abgewandelt, dass der Sondenkopf 100 drehbar ist. Hierzu kann der Klemmverschluss 280 temporär geöffnet werden. Eine entsprechende Drehbarkeit und ein Zustand nach einer Drehung sind in Fig. 36 dargestellt.

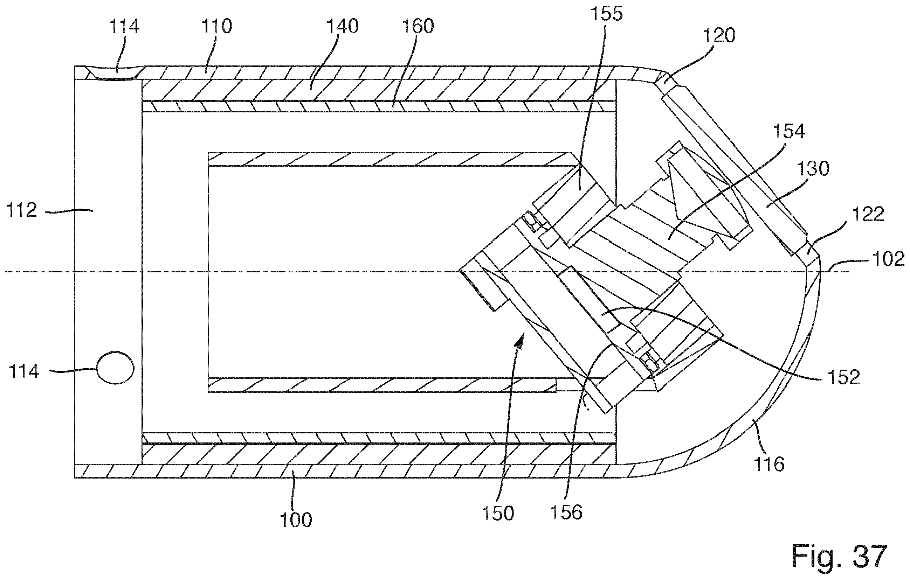

Fig. 37 zeigt einen Sondenkopf 100 gemäß einem siebten Ausführungsbeispiel. Dieser weist im Vergleich zu den bisherigen Ausführungsbeispielen mit Beobachtungseinheit 150 zusätzlich einen Isolationsblock 155 auf, welcher das Objektiv 154 seitlich umgibt. Dadurch kann ein zusätzlicher Wärmeschutz für die Kamera 152 und das Objektiv 154 erreicht werden. Ein solcher Isolationsblock 155 ist grundsätzlich bei allen Ausführungsbeispielen mit Beobachtungseinheit 150 verwendbar. In der gezeigten Ausführung ist das Objektiv 154 direkt auf der Platine 156 angebracht.

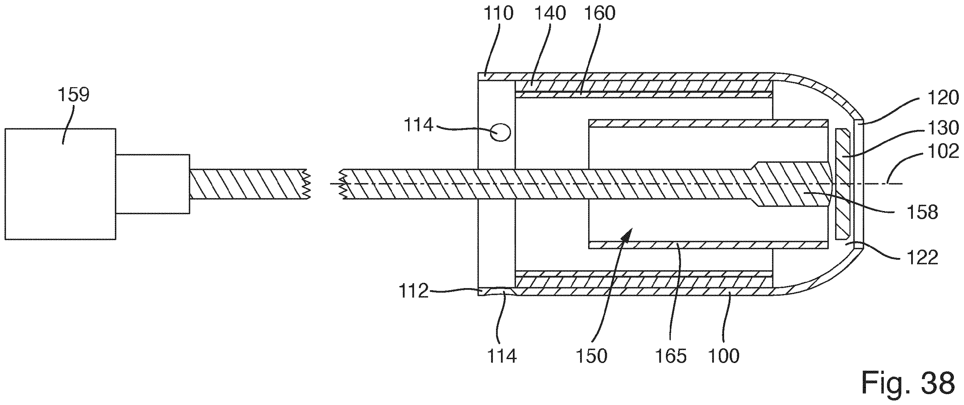

Fig. 38 zeigt einen Sondenkopf 100 gemäß einem achten Ausführungsbeispiel. Dabei ist die Beobachtungseinheit 150 nicht mit einer Kamera, sondern mittels eines Lichtleiters 158 ausgeführt. Dieser nimmt durch das Sichtfenster 120 und das Schutzelement 130 eingedrungenes Licht auf und leitet es nach außerhalb des heißgasführenden Systems. Dort kann es mit einer Bildbeobachtungseinrichtung 159 ausgewertet werden. Diese ist hier nur schematisch gezeigt und kann beispielsweise einen Schirm zur unmittelbaren visuellen Beobachtung oder eine elektronische Kamera aufweisen. Auf die Anordnung elektronischer Komponenten innerhalb des heißgasführenden Systems kann auf diese Weise verzichtet werden.

Erwähnte Schritte des erfindungsgemäßen Verfahrens können in der angegebenen Reihenfolge ausgeführt werden. Sie können jedoch auch in einer anderen Reihenfolge ausgeführt werden, soweit dies technisch sinnvoll ist. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

Es sei darauf hingewiesen, dass in den Ansprüchen und in der Beschreibung Merkmale in Kombination beschrieben sein können, beispielsweise um das Verständnis zu erleichtern, obwohl diese auch separat voneinander verwendet werden können. Der Fachmann erkennt, dass solche Merkmale auch unabhängig voneinander mit anderen Merkmalen oder Merkmalskombinationen kombiniert werden können.

Rückbezüge in Unteransprüchen können bevorzugte Kombinationen der jeweiligen Merkmale kennzeichnen, schließen jedoch andere Merkmalskombinationen nicht aus.

### Bezugszeichenliste:

- 1: heißgasführendes System
- 2: Wand
- 3: Wärmetauscherrohre
- 10: Diagnosevorrichtung
- 20: Hüllrohr
- 21: Isolationsschicht
- 22: Befestigungsbereich
- 24: Stützen
- 30: Aufhängung
- 35: Aufhängung
- 40: Adapterelement
- 100: Sondenkopf
- 102: Längsachse
- 104: Zentrierelemente
- 106: Luftkanal
- 108: Ausblasrohr
- 109: Vorsprung
- 110: Außenhülle
- 112: Flansch
- 114: Durchgangsloch
- 116: halbkugelförmiger Bereich
- 120: Sichtfenster
- 122: Luftaustrittsspalt
- 125: weiteres Sichtfenster
- 130: Schutzelement
- 140: Isolierschicht
- 142: vordere Isolierschicht
- 150: Beobachtungseinheit
- 152: Kamera
- 153: Objektivhalter
- 154: Objektiv
- 155: Isolationsblock
- 156: Platine
- 158: Lichtleiter
- 159: Bildbeobachtungseinrichtung
- 160: Einsteckhülse
- 165: Trägerelement
- 170: Beleuchtungsvorrichtung
- 172: Lampe
- 180: Verstelleinrichtung
- 182: Stange
- 183: Schwenkhebel
- 184: Buchse
- 186: zweite Stange
- 188: Drehachse
- 190: Testabschnitt
- 200: Sondenträger
- 202: Flansch
- 204: Lagerungsabschnitt
- 206: Abstandsabschnitt
- 208: Abdichtscheibe
- 210: Hülle
- 212: Vorsprung
- 220: Isolationsschicht
- 230: Kanal
- 232: Auslass
- 233: Auslassrohr
- 235: Kanalwand
- 240: Einlass
- 245: Einlassöffnung
- 250: weiterer Kanal
- 260: Auslass
- 265: Auslassanschluss
- 270: Lagerungsscheibe
- 275: rohrförmiger Bereich
- 280: Klemmverschluss
- 285: Spannbügel
- 300: Sondenanordnung

## Patentansprüche

1. Sondenkopf (100) zur visuellen Beobachtung eines heißgasführenden Systems (1) von innen, wobei der Sondenkopf (100) zur Anordnung im Heißgas ausgebildet ist und folgendes aufweist:
- ein Sichtfenster (120), welches im Sondenkopf (100) ausgebildet ist und ganz oder teilweise von einem ganz oder teilweise transparenten Schutzelement (130) abgedeckt wird, und
- eine Beobachtungseinheit (150), die zumindest teilweise im Sondenkopf (100) angeordnet ist und zur Beobachtung durch das Sichtfenster (120) konfiguriert ist,
- wobei innerhalb des Sondenkopfs (100) ein Hohlraum ausgebildet ist, und
- wobei der Sondenkopf (100) durch Einblasen von Luft oder eines Gasmediums in den Hohlraum kühlbar oder temperierbar ist.

2. Sondenkopf (100) nach Anspruch 1,
- wobei in dem Hohlraum die Beobachtungseinheit (150) angeordnet ist.

3. Sondenkopf (100) nach einem der vorhergehenden Ansprüche,
- welcher keine Flüssigkeitskühlung und/oder keinen flüssigkeitsführenden Kanal aufweist.

4. Sondenkopf (100) nach einem der vorhergehenden Ansprüche,
- wobei der Sondenkopf (100) eine Steuerungsvorrichtung aufweist oder damit verbunden ist,
- wobei die Steuerungsvorrichtung dazu konfiguriert ist, basierend auf Messwerten von zumindest zwei in dem Sondenkopf (100) angeordneten Temperaturmesselementen einen in den Sondenkopf (100) eingeblasenen Strom von Luft oder eines Gasmediums zur Ausbildung eines vorgegebenen Temperaturgradienten in dem Sondenkopf (100) zu steuern.

5. Sondenkopf (100) nach einem der vorhergehenden Ansprüche,
- wobei im Sondenkopf (100) seitlich zum Schutzelement (130) ein Luftaustrittsspalt (122) ausgebildet ist.

6. Sondenkopf (100) nach Anspruch 5,
- wobei der Luftaustrittsspalt (122) als Teil des Sichtfensters (120) ausgebildet ist und/oder fluidisch mit einem Innenraum des Sondenkopfs (100) und/oder mit einem Lufteinlass des Sondenkopfs (100) verbunden ist.

7. Sondenkopf (100) nach einem der vorhergehenden Ansprüche,
- wobei der Sondenkopf (100) einen Flansch (112) zur Befestigung des Sondenkopfs (100) an einem Sondenträger (200) aufweist.

8. Sondenkopf (100) nach Anspruch 7,
- wobei radial innerhalb des Flansches (112) ein Einlass für Luft ausgebildet ist.

9. Sondenkopf (100) nach einem der Ansprüche 7 oder 8,
- wobei an dem Flansch (112) eine oder mehrere Bohrungen und/oder Befestigungsmittel zur Verbindung mit einer Kesselwand oder einem Sondenträger ausgebildet sind.

10. Sondenanordnung (300), welche folgendes aufweist:
- einen Sondenkopf (100) nach einem der vorhergehenden Ansprüche, und
- einen Sondenträger (200) zum Tragen des Sondenkopfs (100) in einem heißgasführenden System (1),
- wobei der Sondenträger (200) folgendes aufweist:
- einen Flansch (202) zur lösbaren Befestigung des Sondenkopfs (100),
- einen Lagerungsabschnitt (204) zur lösbaren Lagerung oder Befestigung an einer Wand (2) des heißgasführenden Systems (1), und
- einen Abstandsabschnitt (206), an welchem der Flansch (202) und der Lagerungsabschnitt (204) angebracht sind,
- wobei in dem Abstandsabschnitt (206) oder in dem Sondenträger (200) mindestens ein Kanal (230) zur Führung von Luft und/oder zur Aufnahme von Gestänge oder Leitungen ausgebildet ist,
- wobei sich der Kanal (230) vom Flansch (202) zum Lagerungsabschnitt (204) erstreckt, und
- wobei der Sondenkopf (100) an dem Flansch (202) des Sondenträgers (200) lösbar befestigt ist.

11. Sondenanordnung (300) nach Anspruch 10,
- wobei in dem Abstandsabschnitt (206) mindestens ein weiterer Kanal (250) zur Führung von Luft und/oder zur Aufnahme von Gestänge oder Leitungen ausgebildet ist,
- wobei der weitere Kanal (250) zum Kanal (230) separat ist, und
- wobei sich der weitere Kanal (250) vom Flansch (202) zum Lagerungsabschnitt (204) erstreckt.

12. Sondenanordnung (300) nach Anspruch 11,
- wobei der weitere Kanal (250) den Kanal (230) im Querschnitt ganz oder teilweise umgibt.

13. Sondenanordnung (300) nach einem der Ansprüche 10 bis 12,
- wobei der Kanal (230) und/oder der weitere Kanal (250) innerhalb des Flansches (202) einen Auslass (232) zum Einblasen von Luft in den Sondenkopf (100) und/oder zum Auslassen von Gestänge oder Leitungen in den Sondenkopf (100) aufweisen.

14. Sondenanordnung (300) nach einem der Ansprüche 10 bis 13,
- wobei der Kanal (230) und/oder der weitere Kanal (250) ganz oder teilweise von einer Isolationsschicht (220) umgeben ist/sind.

15. Sondenanordnung (300) nach einem der Ansprüche 10 bis 14,
- welcher ein Auslassrohr (233) aufweist, welches über den Flansch (202) hinaussteht, in den Sondenkopf (100) hineinreicht und mit dem Kanal (230) fluidisch verbunden ist,
und/oder
- welche ein Ausblasrohr (108) aufweist, welches lösbar mit dem Sondenträger (200) verbunden ist und den Kanal (230) in den Sondenkopf (100) fluidisch verlängert.
